# EUROPEAN PATENT APPLICATION

(11) **EP 4 797 091 A1**
(43) Date of publication of application: **26.08.2026**
(21) Application number: 24893168.5
(22) Date of filing: 29.10.2024
(51) Int. Cl.: G06F 9/451

(54) **INTERFACE DISPLAY METHOD AND RELATED DEVICE**

(30) Priority: 22.11.2023 CN 202311572254
(71) Applicant: HUAWEI TECHNOLOGIES CO., LTD., Shenzhen 518129 (CN)
(72) Inventor: JIANG, Shunji, Shenzhen, Guangdong 518129 (CN); WANG, Zongbo, Shenzhen, Guangdong 518129 (CN); ZHENG, Jiangzhen, Shenzhen, Guangdong 518129 (CN); WANG, Yu, Shenzhen, Guangdong 518129 (CN); CHEN, Xinye, Shenzhen, Guangdong 518129 (CN)
(74) Representative: Pfenning, Meinig & Partner mbB
(86) International application number: PCT/CN2024/127969
(87) International publication number: WO 2025/108010

(57) **Abstract**

An interface display method is disclosed, and relates to the field of terminal software. The method includes: receiving a first operation, and displaying an event widget management interface, where the event widget management interface includes a thumbnail of at least one event widget, the expanded event widget includes a plurality of subtask widgets, and each subtask widget is a trigger entry of a subfunction of an application; and receiving a second operation, and switching from the event widget management interface to an application window management interface. In this application, a plurality of subtask widgets are aggregated in one event widget, and each subtask widget is used as a trigger entry of a subfunction of an application. When a corresponding subtask widget is selected, a terminal can jump to a corresponding application, so that a user performs an operation at a granularity of a subtask of an event. During event management, the user does not need to start different applications, but directly selects a subtask under the event widget to trigger the corresponding application. This reduces operation costs of the user.

## Description

This application claims priority to Chinese Patent Application No. 202311572254.6, filed with the China National Intellectual Property Administration on November 22, 2023 and entitled "INTERFACE DISPLAY METHOD AND RELATED DEVICE", which is incorporated herein by reference in its entirety.

### TECHNICAL FIELD

This application relates to the field of terminals, and in particular, to an interface display method and a related device.

### BACKGROUND

An operating system of a terminal generally maintains a conventional application-centric interaction manner. In an application-centric architecture mode, when a user wants to complete an intent task, the user may need to switch between a plurality of different applications. For example, for travel, the user needs to use a ticketing application to purchase an air ticket or a train ticket, a hotel booking application to book a hotel, and an alarm clock to add an alarm for reminding the travel.

In the application-centric manner, the user needs to manage different subtasks of an event in a plurality of different applications, and when there are a plurality of events at the same time, the events cannot be effectively managed.

### SUMMARY

According to a first aspect, this application provides an interface display method. The method includes: A terminal device may receive a first operation used to trigger display of an event widget management interface, and display the event widget management interface, where a difference between the event widget management interface and an existing application management interface is that the event widget management interface includes a thumbnail of at least one event widget, the expanded event widget includes a plurality of subtask widgets, and each subtask widget is a trigger entry of a subfunction of an application; and the event widget management interface may be switched to an application window management interface by performing a specific operation.

In embodiments of this application, a plurality of subtask widgets may be aggregated in one event widget, and each subtask widget is used as a trigger entry of a subfunction of an application. When a corresponding subtask widget is selected, a terminal can jump to a corresponding application. In this case, the application corresponding to the subtask widget may be started and run on the frontend. In the foregoing manner, a user can perform an operation at a granularity of a subtask of an event. During event management, the user does not need to start different applications, but directly selects a subtask under the event widget to trigger the corresponding application. This reduces operation costs of the user. In addition, subtask widgets of an event widget are aggregated in one event widget, so that only the event widget needs to be used for management, thereby facilitating parallel management of a plurality of events.

In a possible implementation, the first operation is: an operation of sliding up from a bottom of a desktop, or an operation on a preset control, where the preset control is a terminal assistant or a navigation bar; or a selection operation on first indication information of the at least one event widget in a first interface; or a switching operation on a first thumbnail of an application window group in a second interface, and a selection operation on first indication information that is of the at least one event widget and that is displayed in response to the switching operation.

In a possible implementation, the first interface further includes second indication information of the application window group, the second indication information of the application window group is arranged after the first indication information of the at least one event widget, the second interface further includes second indication information of the at least one event widget, and the second indication information of the at least one event widget is arranged after the first thumbnail of the application window group.

The first indication information of the at least one event widget may be a first thumbnail of the at least one event widget. Compared with the thumbnail of the at least one event widget in the event widge management interface, the first thumbnail of the at least one event widget is used to trigger display of the event widge management interface, and the thumbnail of the at least one event widget in the event widge management interface is used to trigger starting of the event widget.

The second indication information of the at least one event widget may be a second thumbnail of the at least one event widget.

The first indication information of the application window group may be the first thumbnail of the application window group.

The second indication information of the application window group may be a second thumbnail of the application window group.

In a possible implementation, the first operation is specifically a slide operation on the preset control, and an effective distance of the slide operation in the first operation is within a first preset range; and the method further includes: receiving a third operation, and displaying the second interface, where the third operation is a slide operation on the preset control, and an effective distance of the slide operation in the third operation is within a second preset range.

In a possible implementation, the method further includes: receiving a selection for a thumbnail of a target event widget in the at least one event widget in the event widget management interface, and adding the thumbnail of the target event widget to a system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the method further includes: receiving a fourth operation, and displaying an event widget corresponding to a to-do event, where the fourth operation is selecting a thumbnail of the event widget corresponding to the to-do event in the event widget management interface, the event widget corresponding to the to-do event includes a plurality of subtask widgets, and each subtask widget is a trigger entry of a subfunction of an application.

In a possible implementation, the method further includes: receiving a fifth operation, and switching the event widget corresponding to the to-do event to the first interface, where the first interface is an application interface, the system desktop, or the application window management interface.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the method further includes: receiving a creation request that is of the to-do event and that is entered by the user; determining, based on the creation request, requirement information of a plurality of subtasks used to implement the to-do event and an application of a function used to execute each subtask; and
obtaining a requirement feedback result of each subtask by using the requirement information of the plurality of subtasks as a query and by interacting with the corresponding application, where the requirement feedback result is used to construct the plurality of subtask widgets.

In embodiments of this application, at a system layer, an associated application may be automatically determined by parsing a creation request of an event widget, and the associated application is invoked to create a subtask widget. There is no need to start each associated application to implement a plurality of subtasks of one event. All operations can be completed on the system desktop, and operations such as application switching and interface jumping are not required, thereby simplifying a subtask processing procedure of the event.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
determining the requirement information of the plurality of subtasks used to implement the to-do event includes:
displaying an editing page of the first subtask;
receiving first requirement information that is of the first subtask and that is entered by the user on the editing page;
receiving a sixth operation, and switching from the editing page of the first subtask to an editing page of the second subtask; and
receiving requirement information that is of the second subtask and that is entered by the user on the editing page.

In a possible implementation, the method further includes:
receiving a seventh operation, and switching from the editing page of the second subtask to the editing page of the first subtask including the first requirement information; and
receiving second requirement information of the second subtask that the user continues to enter on the editing page.

According to a second aspect, this application provides an interface display apparatus. The apparatus includes:
a processing module, configured to: receive a first operation, and trigger a display module to display an event widget management interface, where the event widget management interface includes a thumbnail of at least one event widget, the expanded event widget includes a plurality of subtask widgets, and each subtask widget is a trigger entry of a subfunction of an application; and receive a second operation, and trigger the display module to switch from the event widget management interface to an application window management interface.

In a possible implementation, the first operation is:
an operation of sliding up from a bottom of a desktop, or an operation on a preset control, where the preset control is a terminal assistant or a navigation bar; or
a selection operation on first indication information of the at least one event widget in a first interface; or
a switching operation on a first thumbnail of an application window group in a second interface, and a selection operation on first indication information that is of the at least one event widget and that is displayed in response to the switching operation.

In a possible implementation, the first interface further includes second indication information of the application window group, the second indication information of the application window group is arranged after the first indication information of the at least one event widget, the second interface further includes second indication information of the at least one event widget, and the second indication information of the at least one event widget is arranged after the first thumbnail of the application window group.

In a possible implementation, the first operation is specifically a slide operation on the preset control, and an effective distance of the slide operation in the first operation is within a first preset range; and the processing module is further configured to:
receive a third operation, and trigger the display module to display the second interface, where the third operation is a slide operation on the preset control, and an effective distance of the slide operation in the third operation is within a second preset range.

In a possible implementation, the processing module is further configured to:
receive a selection for a thumbnail of a target event widget in the at least one event widget in the event widget management interface, and trigger the display module to add the thumbnail of the target event widget to a system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the processing module is further configured to:
receive a fourth operation, and trigger the display module to display an event widget corresponding to the to-do event, where the fourth operation is selecting a thumbnail of the event widget corresponding to the to-do event in the event widget management interface, the event widget corresponding to the to-do event includes a plurality of subtask widgets, and each subtask widget is a trigger entry of a subfunction of an application.

In a possible implementation, the processing module is further configured to:
receive a fifth operation, and trigger the display module to switch the event widget corresponding to the to-do event to the first interface, where the first interface is an application interface, the system desktop, or the application window management interface.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the processing module is further configured to:
receive a creation request that is of the to-do event and that is entered by a user;
determine, based on the creation request, requirement information of a plurality of subtasks used to implement the to-do event and an application of a function used to execute each subtask; and
obtain a requirement feedback result of each subtask by using the requirement information of the plurality of subtasks as a query and by interacting with the corresponding application, where the requirement feedback result is used to construct the plurality of subtask widgets.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
the processing module is specifically configured to:
trigger the display module to display an editing page of the first subtask;
receive first requirement information that is of the first subtask and that is entered by the user on the editing page;
receive a sixth operation, and trigger the display module to switch from the editing page of the first subtask to an editing page of the second subtask; and
receive requirement information that is of the second subtask and that is entered by the user on the editing page.

In a possible implementation, the processing module is further configured to:
receive a seventh operation, and trigger the display module to switch from the editing page of the second subtask to the editing page of the first subtask including the first requirement information; and
receive second requirement information of the second subtask that the user continues to enter on the editing page.

According to a third aspect, this application provides an interface display method. The method includes: displaying an event widget corresponding to a to-do event, where the event widget corresponding to the to-do event includes a plurality of subtask widgets and indication information of the to-do event; and each subtask widget is a trigger entry of a subfunction of an application, and the event widget corresponding to the to-do event indicates that the plurality of subtask widgets are associated with the to-do event; and receiving a fifth operation, and switching the event widget corresponding to the to-do event to a first interface, where the first interface is an application interface, a system desktop, or an application window management interface.

In embodiments of this application, a plurality of subtask widgets may be aggregated in one event widget, and each subtask widget is used as a trigger entry of a subfunction of an application. When a corresponding subtask widget is selected, a terminal can jump to a corresponding application. In this case, the application corresponding to the subtask widget may be started and run on the frontend. In the foregoing manner, a user can perform an operation at a granularity of a subtask of an event. During event management, the user does not need to start different applications, but directly selects a subtask under the event widget to trigger the corresponding application. This reduces operation costs of the user. In addition, subtask widgets of an event widget are aggregated in one event widget, so that only the event widget needs to be used for management, thereby facilitating parallel management of a plurality of events.

In a possible implementation, before displaying the event widget corresponding to the to-do event, the method further includes: receiving a fourth operation, where the fourth operation is selecting the event widget corresponding to the to-do event in the system desktop or an event widget management interface, and the system desktop or the event widget management interface includes at least one event widget including the to-do event; or the fourth operation is an operation on a preset control, and the preset control is a terminal assistant or a navigation bar.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the method further includes: receiving a first operation, and displaying the event widget management interface, where the event widget management interface includes the at least one event widget including the to-do event. The first operation is: an operation of sliding up from a bottom of a desktop of the interface, or an operation on the preset control, where the preset control is the terminal assistant or the navigation bar; or a selection operation on first indication information of the at least one event widget in the first interface; or a switching operation on a first thumbnail of an application window group in a second interface, and a selection operation on first indication information that is of the at least one event widget and that is displayed in response to the switching operation.

In a possible implementation, before displaying the first interface, the method further includes: receiving the first operation, where the first operation is the operation of sliding up from the bottom of the desktop of the interface, or the operation on the preset control, where the preset control is the terminal assistant or the navigation bar.

In a possible implementation, the first interface further includes second indication information of the application window group, the second indication information of the application window group is arranged after the first indication information of the at least one event widget, the second interface further includes second indication information of the at least one event widget, and the second indication information of the at least one event widget is arranged after the first thumbnail of the application window group.

In a possible implementation, the first operation is specifically a slide operation on the preset control, and an effective distance of the slide operation is within a first preset range; and the method further includes: receiving a third operation, and displaying the second interface, where the second interface includes the first thumbnail of the application window group, the third operation is a slide operation on the preset control, and an effective distance of the slide operation is within a second preset range.

In a possible implementation, the method further includes: receiving a selection for a thumbnail of a target event widget in the at least one event widget in the event widget management interface, and adding the thumbnail of the target event widget to the system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the method further includes: receiving a creation request that is of the to-do event and that is entered by a user; and
determining, based on the creation request, requirement information of a plurality of subtasks used to implement the to-do event and an application of a function used to execute each subtask; and obtaining a requirement feedback result of each subtask by using the requirement information of the plurality of subtasks as a query and by interacting with the corresponding application, where the requirement feedback result is used to construct the plurality of subtask widgets.

In embodiments of this application, at a system layer, an associated application may be automatically determined by parsing a creation request of an event widget, and the associated application is invoked to create a subtask widget. There is no need to start each associated application to implement a plurality of subtasks of one event. All operations can be completed on the system desktop, and operations such as application switching and interface jumping are not required, thereby simplifying a subtask processing procedure of the event.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
determining the requirement information of the plurality of subtasks used to implement the to-do event includes:
displaying an editing page of the first subtask;
receiving first requirement information that is of the first subtask and that is entered by the user on the editing page;
receiving a sixth operation, and switching from the editing page of the first subtask to an editing page of the second subtask; and
receiving requirement information that is of the second subtask and that is entered by the user on the editing page.

In a possible implementation, the method further includes:
receiving a seventh operation, and switching from the editing page of the second subtask to the editing page of the first subtask including the first requirement information; and
receiving second requirement information of the second subtask that the user continues to enter on the editing page.

According to a fourth aspect, this application provides an interface display apparatus. The apparatus includes:
a processing module, configured to: display an event widget corresponding to a to-do event, where the event widget corresponding to the to-do event includes a plurality of subtask widgets and indication information of the to-do event; and each subtask widget is a trigger entry of a subfunction of an application, and the event widget corresponding to the to-do event indicates that the plurality of subtask widgets are associated with the to-do event; and
receive a fifth operation, and switch the event widget corresponding to the to-do event to a first interface, where the first interface is an application interface, a system desktop, or an application window management interface.

In a possible implementation, before the event widget corresponding to the to-do event is displayed, the processing module is further configured to:
receive a fourth operation.

The fourth operation is selecting the event widget corresponding to the to-do event in the system desktop or an event widget management interface, and the system desktop or the event widget management interface includes at least one event widget including the to-do event; or
the fourth operation is an operation on a preset control, and the preset control is a terminal assistant or a navigation bar.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the processing module is further configured to:
display the first interface, where the first interface includes first indication information of the at least one event widget; and
receive a selection operation on the first indication information of the at least one event widget, and display the event widget management interface, where the event widget management interface includes the at least one event widget including the to-do event; or
receive a switching operation on a first thumbnail, and display a second interface, where the second interface includes a first thumbnail of an application window group.

In a possible implementation, before the first interface is displayed, the processing module is further configured to:
receive a first operation.

The first operation is an operation of sliding up from a bottom of a desktop of the interface, or an operation on the preset control, where the preset control is the terminal assistant or the navigation bar.

In a possible implementation, the first interface further includes second indication information of the application window group, the second indication information of the application window group is arranged after the first indication information of the at least one event widget, the second interface further includes second indication information of the at least one event widget, and the second indication information of the at least one event widget is arranged after the first thumbnail of the application window group.

In a possible implementation, the first operation is specifically a slide operation on the preset control, and an effective distance of the slide operation is within a first preset range; and the processing module is further configured to:
receive a third operation, and display the second interface, where the second interface includes the first thumbnail of the application window group, the third operation is a slide operation on the preset control, and an effective distance of the slide operation is within a second preset range.

In a possible implementation, the processing module is further configured to:
receive a selection for a thumbnail of a target event widget in the at least one event widget in the event widget management interface, and add the thumbnail of the target event widget to the system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the processing module is further configured to:
receive a creation request that is of the to-do event and that is entered by a user;
determine, based on the creation request, requirement information of a plurality of subtasks used to implement the to-do event and an application of a function used to execute each subtask; and
obtain a requirement feedback result of each subtask by using the requirement information of the plurality of subtasks as a query and by interacting with the corresponding application, where the requirement feedback result is used to construct the plurality of subtask widgets.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
the processing module is specifically configured to:
display an editing page of the first subtask;
receive first requirement information that is of the first subtask and that is entered by the user on the editing page;
receive a sixth operation, and switch from the editing page of the first subtask to an editing page of the second subtask; and
receive requirement information that is of the second subtask and that is entered by the user on the editing page.

In a possible implementation, the processing module is further configured to:
receive a seventh operation, and switch from the editing page of the second subtask to the editing page of the first subtask including the first requirement information; and
receive second requirement information of the second subtask that the user continues to enter on the editing page.

According to a fifth aspect, an embodiment of this application provides an interface display apparatus. The apparatus may include a memory, a processor, and a bus system. The memory is configured to store a program, and the processor is configured to execute the program in the memory, to perform the method according to any one of the first aspect and the optional implementations of the first aspect.

According to a sixth aspect, an embodiment of this application provides a computer-readable storage medium. The computer-readable storage medium stores a computer program. When the computer program is run on a computer, the computer is enabled to perform the method according to any one of the first aspect and the optional implementations of the first aspect, and the method according to any one of the third aspect and the optional implementations of the third aspect.

According to a seventh aspect, an embodiment of this application provides a computer program product including instructions. When the computer program product is run on a computer, the computer is enabled to perform the method according to any one of the first aspect and the optional implementations of the first aspect, and the method according to any one of the third aspect and the optional implementations of the third aspect.

According to an eighth aspect, this application provides a chip system. The chip system includes a processor, configured to support an interface display apparatus in implementing a part or all of functions described in the foregoing aspects, for example, sending or processing data and/or information in the foregoing methods. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1 is a diagram of an application architecture;
FIG. 2 is a diagram of an application architecture;
FIG. 3 is a diagram of an application scenario;
FIG. 4 is a diagram of an embodiment of an interface display method according to an embodiment of this application;
FIG. 5A and FIG. 5B are diagrams of an interface according to an embodiment of this application;
FIG. 6A and FIG. 6B are diagrams of an interface according to an embodiment of this application;
FIG. 7A and FIG. 7B are diagrams of an interface according to an embodiment of this application;
FIG. 8A and FIG. 8B are a diagram of an interface according to an embodiment of this application;
FIG. 9A to FIG. 9D are a diagram of an interface according to an embodiment of this application;
FIG. 10A to FIG. 10E are a diagram of an interface according to an embodiment of this application;
FIG. 11A and FIG. 11B are diagrams of an interface according to an embodiment of this application;
FIG. 12A-1 and FIG. 12A-2 are a diagram of an interface according to an embodiment of this application;
FIG. 12B-1 and FIG. 12B-2 are diagrams of an interface according to an embodiment of this application;
FIG. 12C-1 and FIG. 12C-2 are diagrams of an interface according to an embodiment of this application;
FIG. 12D-1 and FIG. 12D-2 are diagrams of an interface according to an embodiment of this application;

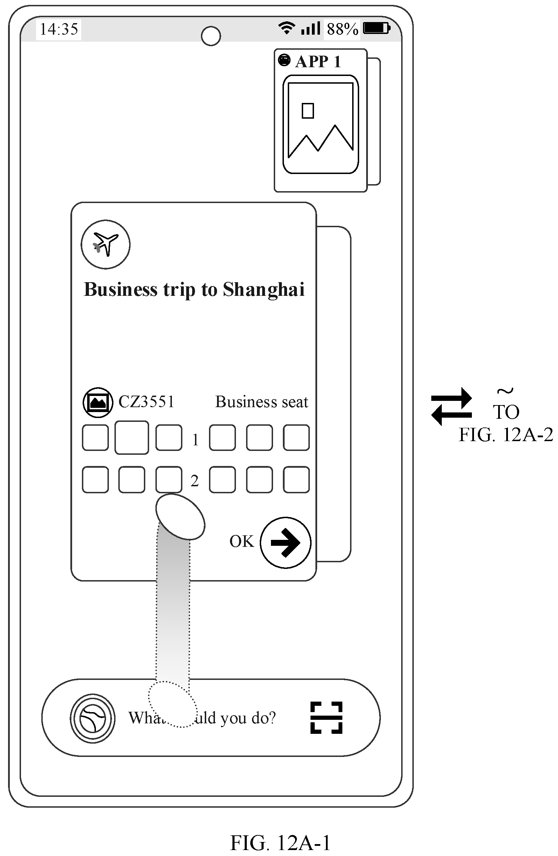

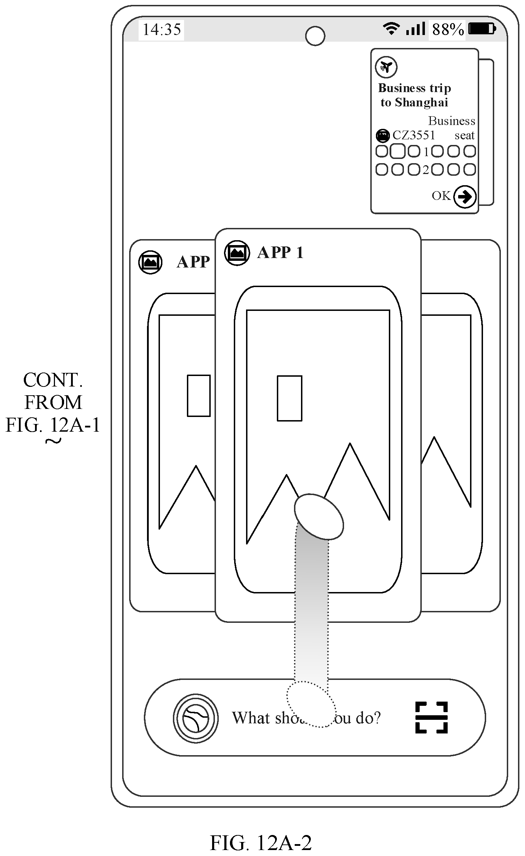

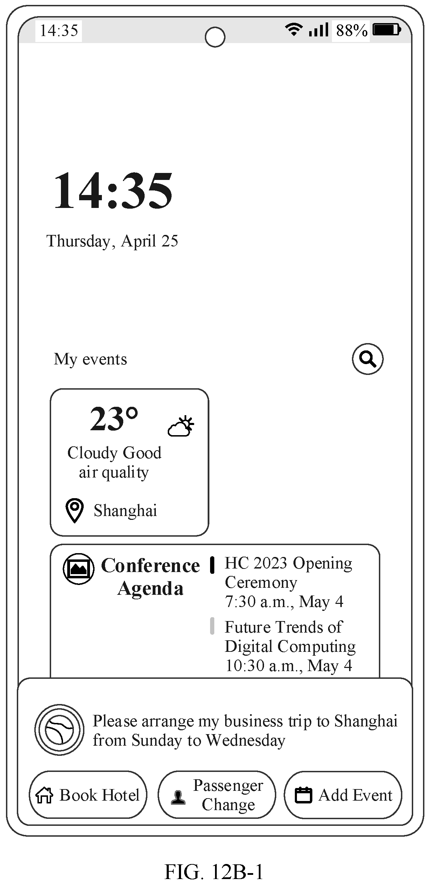

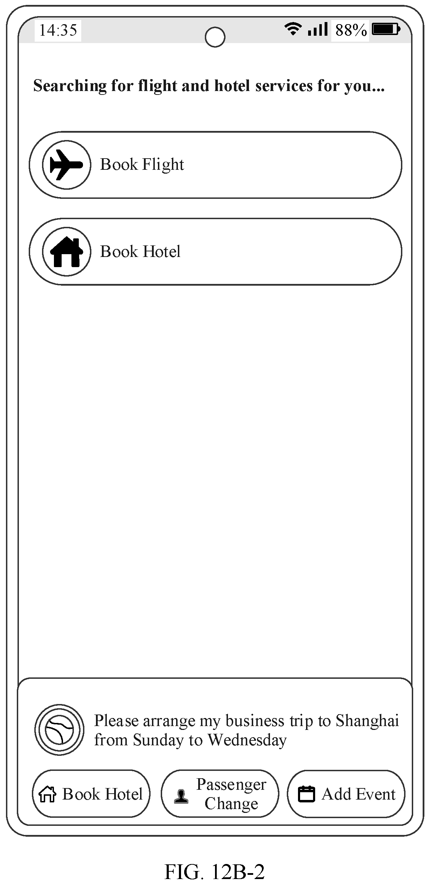

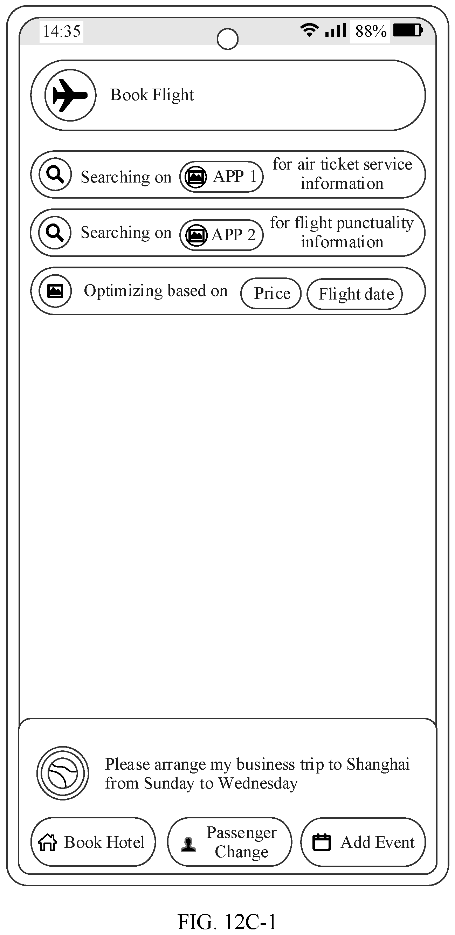

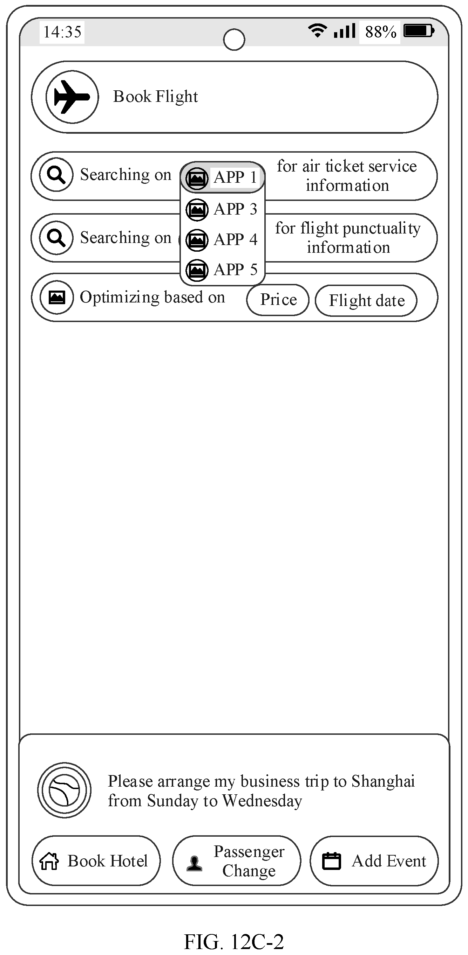

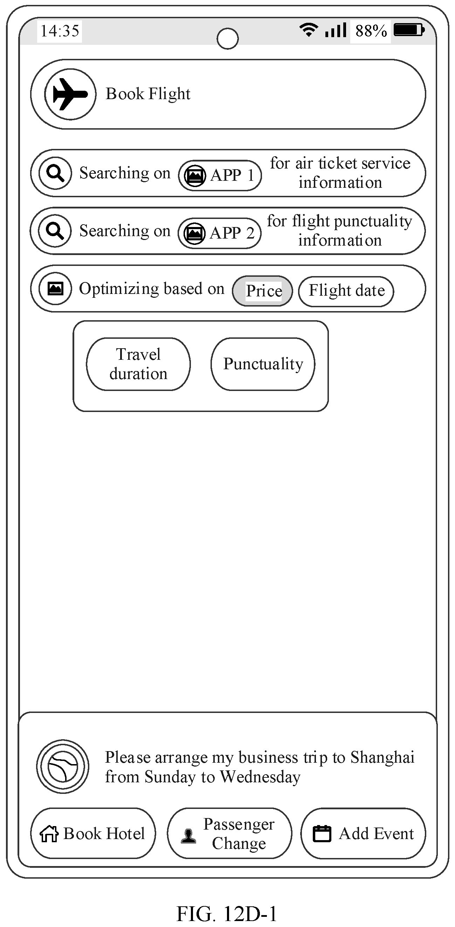

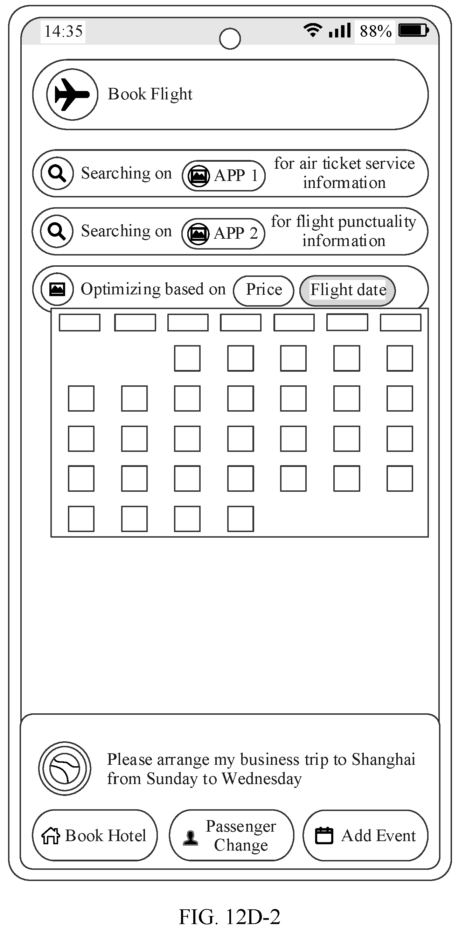

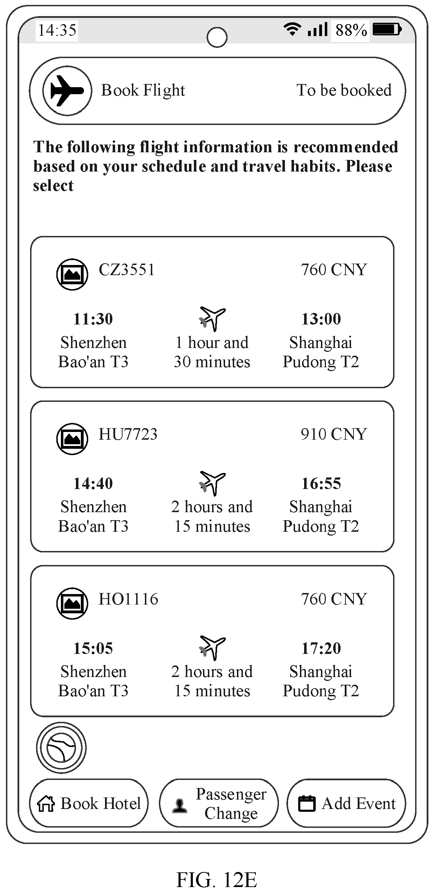

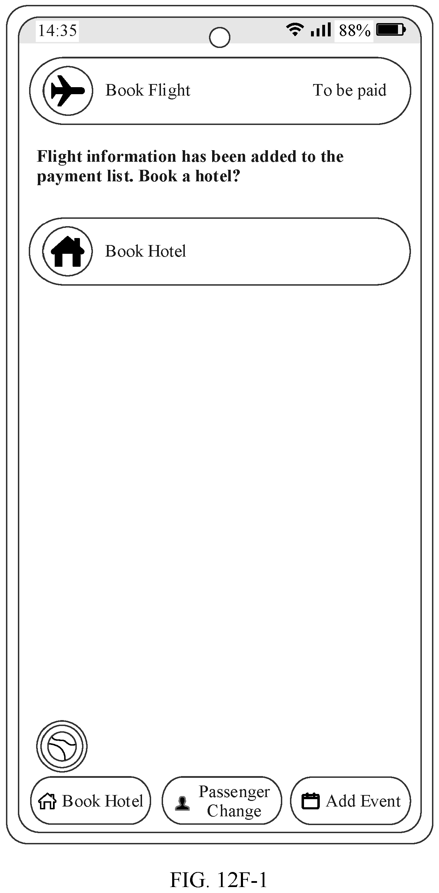

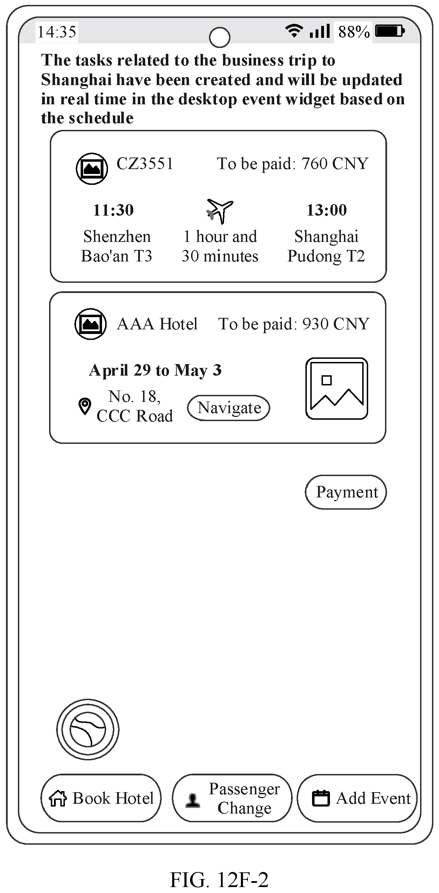

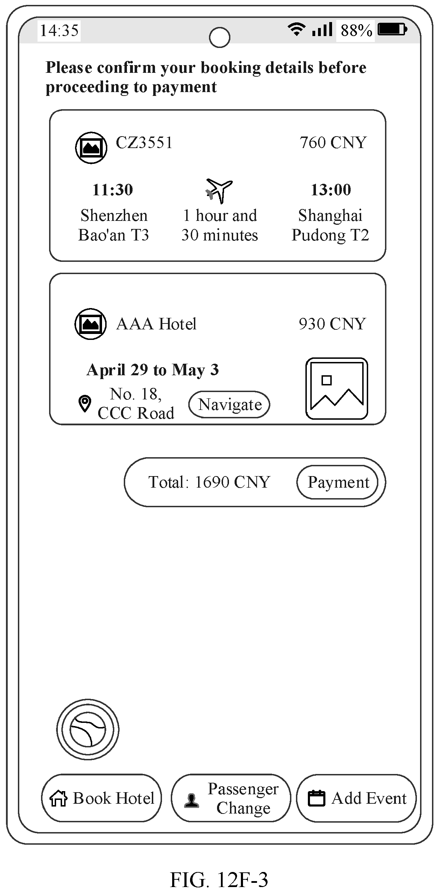

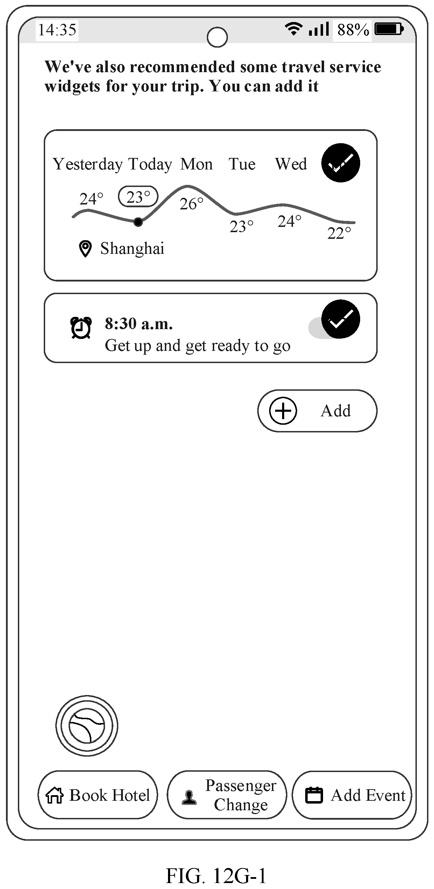

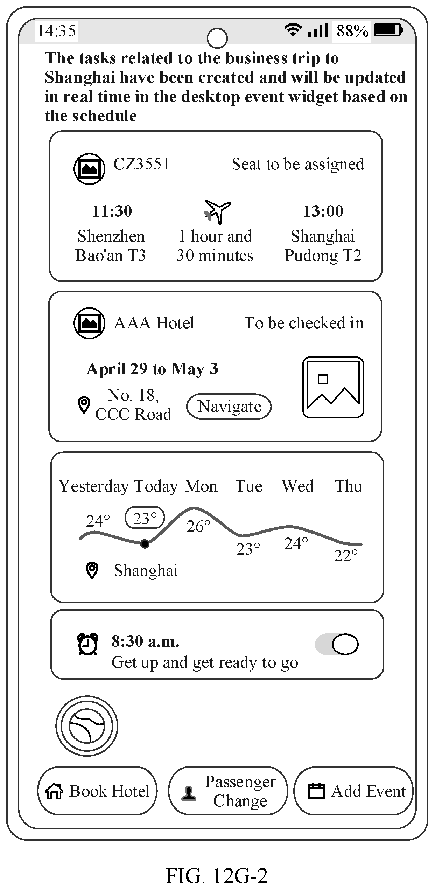

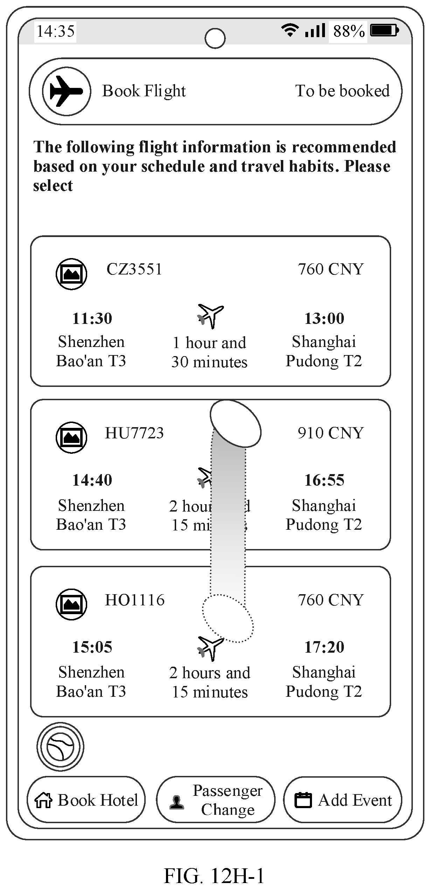

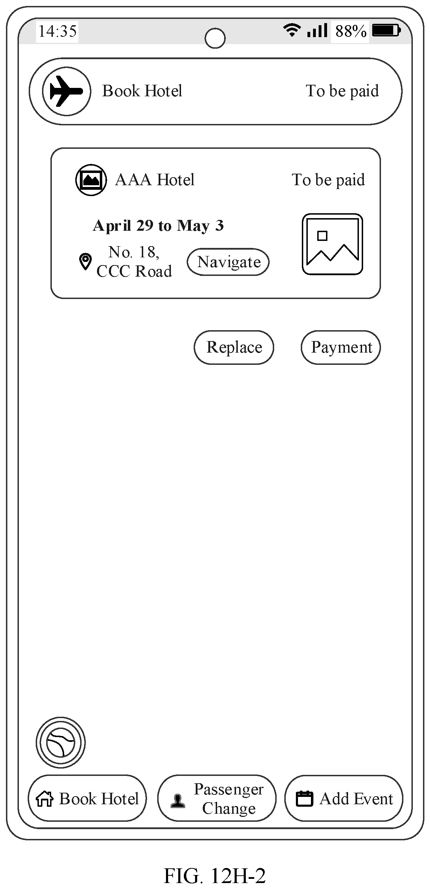

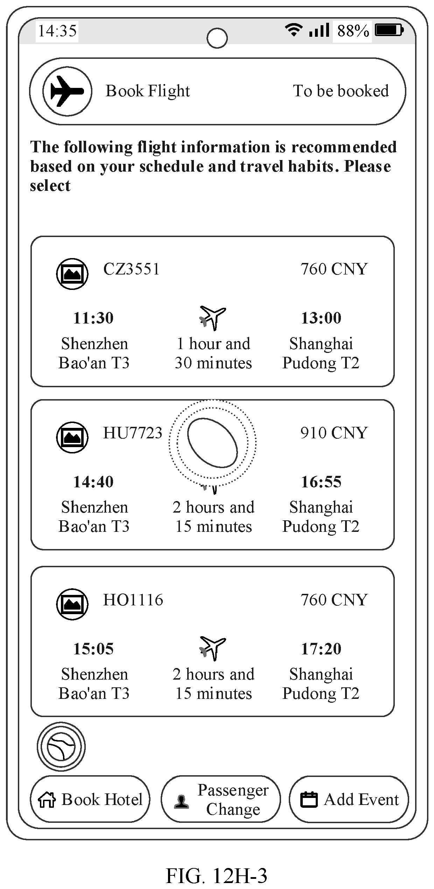

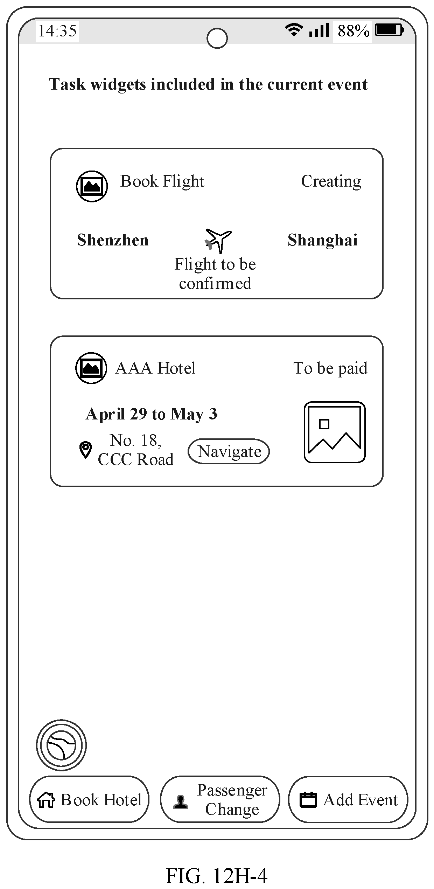

FIG. 12E is a diagram of an interface according to an embodiment of this application;
FIG. 12F-1 to FIG. 12F-3 are diagrams of an interface according to an embodiment of this application;
FIG. 12G-1 and FIG. 12G-2 are diagrams of an interface according to an embodiment of this application;
FIG. 12H-1 to FIG. 12H-4 are diagrams of an interface according to an embodiment of this application;

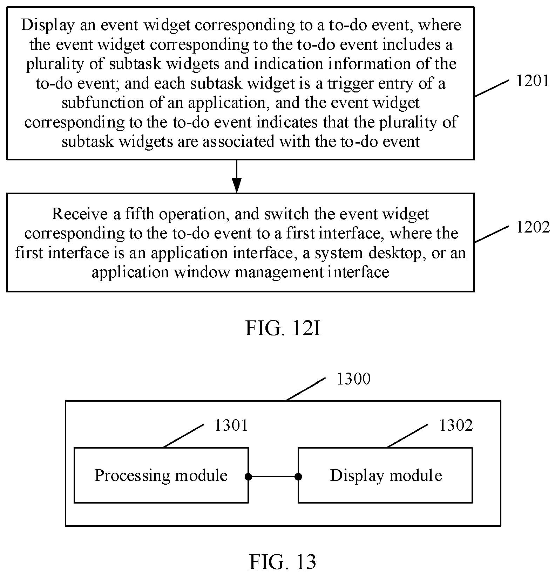

FIG. 12I is a diagram of an embodiment of an interface display method according to an embodiment of this application;
FIG. 13 is a diagram of an embodiment of an interface display apparatus according to an embodiment of this application; and

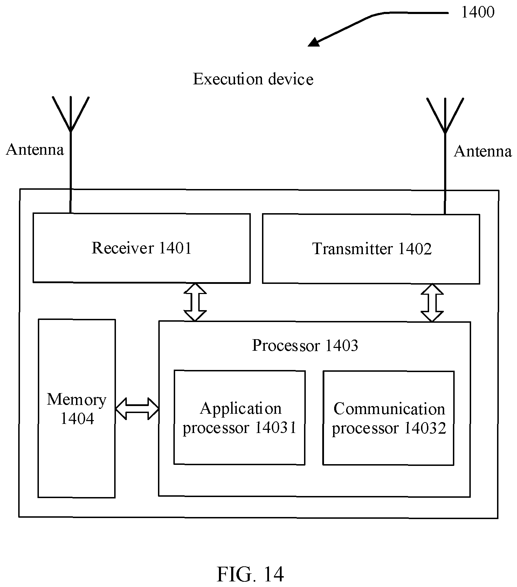

FIG. 14 is a diagram of a structure of an execution device according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

It should be understood that when an element or layer is located "on (on)" another element or layer, or "connected to (connected to)" or "coupled to (coupled to)" another element or layer, the element or layer may be directly located on the another element or layer, or directly connected to or directly coupled to the another element or layer, or one or more intermediate elements or layers may exist. It should also be understood that when one element or layer is located "between (between)" two elements or layers, the element or layer may be a unique element or layer between the two elements or layers, or one or more intermediate elements or layers may exist.

The terms "substantially (substantially)", "about (about)", and the like used in this specification are approximation terms rather than degree terms, and are intended to take into account inherent deviations of measured values or calculated values that are known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "exemplary (exemplary)" is intended to indicate an example or an illustration.

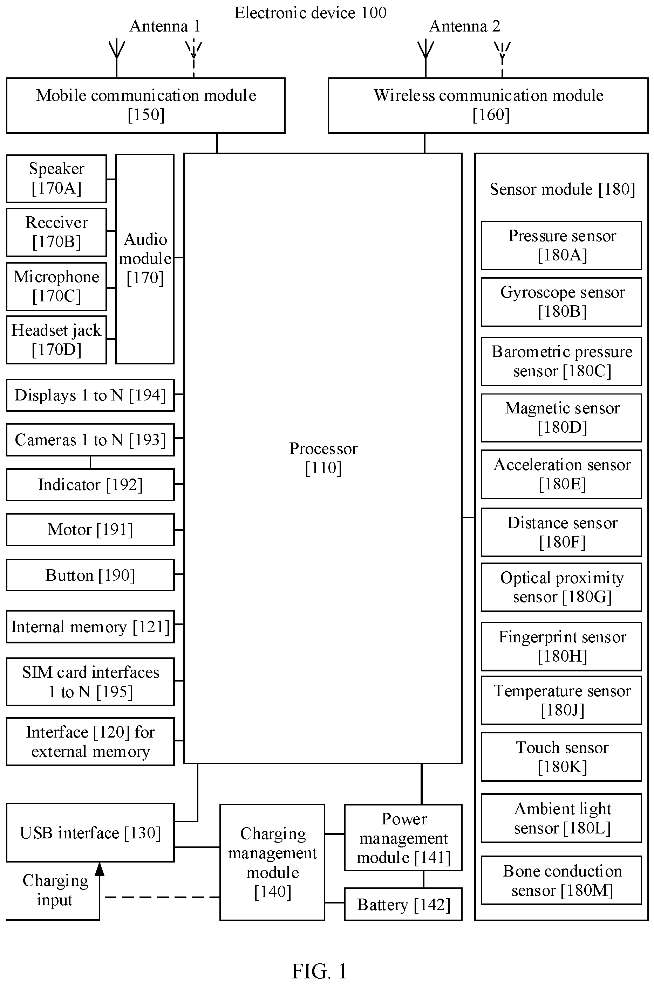

FIG. 1 is a diagram of a structure of an electronic device 100 according to an embodiment of this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may have more or fewer components than those shown in the figure, or have some components that are combined, or have some components that are split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement an image shooting function of the electronic device 100. The processor 110 communicates with the display 194 through the DSI, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing an audio through the headset. The interface may be further configured to connect to another electronic device such as an AR device.

It may be understood that an interface connection relationship between the modules shown in this embodiment of the present invention is merely an example for description, but does not constitute a limitation on a structure of the electronic device 100. In some other embodiments of this application, the electronic device 100 may alternatively use an interface connection manner different from an interface connection manner in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the demodulated low-frequency baseband signal to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a mode of transmission between human brain neurons, and may further continuously perform self-learning. Applications such as intelligent cognition of the electronic device 100 may be implemented through the NPU, for example, image identification, facial identification, voice identification, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt, or may be configured to provide a touch vibration feedback. For example, touch operations performed on different applications (such as a photographing application and an audio playing application) may correspond to different vibration feedback effects. The motor 191 may also correspond to different vibration feedback effects for touch operations performed on different regions of the display 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may also be compatible with different types of SIM cards. The SIM card interface 195 may also be compatible with the external memory card. The electronic device 100 interacts with a network through the SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a microservice architecture, or a cloud architecture. In embodiments of the present invention, an Android system with the layered architecture is used as an example to illustrate a software structure of the electronic device 100.

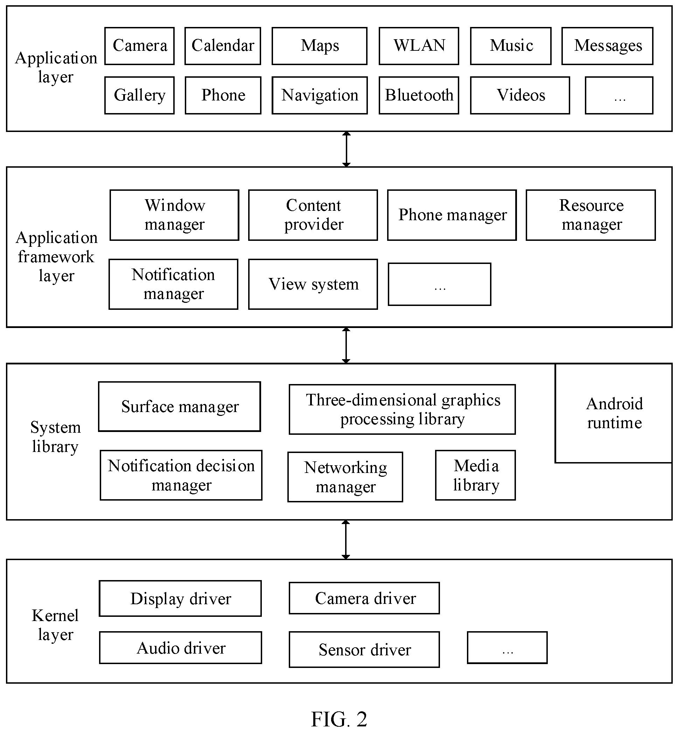

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to: notify download completion, give a message notification, and the like. Alternatively, the notification manager may be a notification that appears at the status bar at the top of a system in a form of a diagram or scroll bar text, for example, a notification of an application running in the background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: One part is a performance function that the Java language needs to schedule, and the other part is a core library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), and a three-dimensional graphics processing library (for example, OpenGL ES).

The surface manager is configured to: manage a display subsystem and provide fusion of two-dimensional and three-dimensional layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The kernel layer is a layer between hardware and software. The kernel layer includes at least a display driver, a camera driver, an audio driver, and a sensor driver.

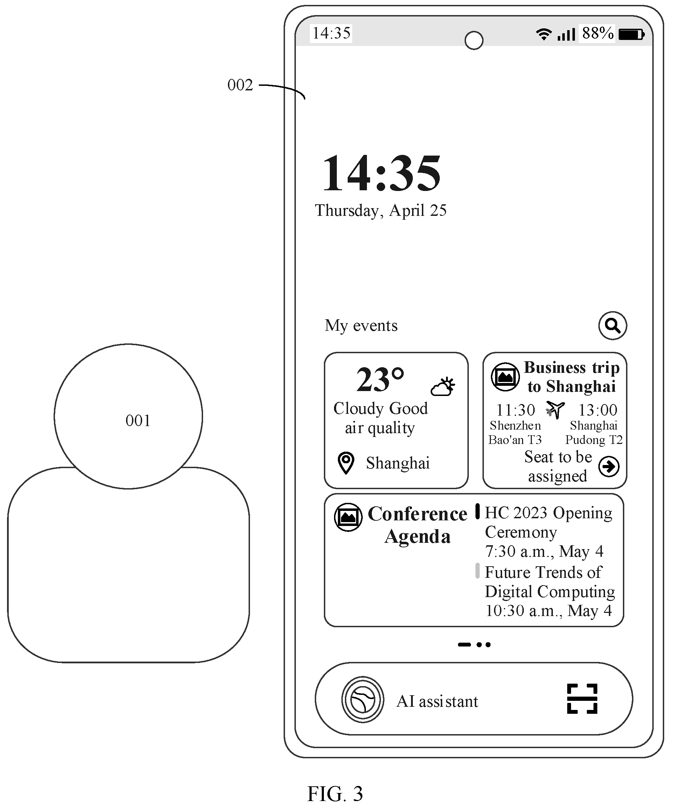

FIG. 3 is a diagram of an application architecture according to an embodiment of this application. The application architecture includes a user 001 and an electronic device 002. The user 001 is usually an owner of the electronic device 002, and obtains network information and communicates with another person by using the electronic device 002. The electronic device 002 may be equipped with an operating system, and have a plurality of types of software installed, such as a call application, a short message service, instant messaging software, and an email application. The electronic device receives an input of the user, like a voice or a gesture, to change a displayed interface.

An operating system of a terminal generally maintains a conventional application-centric interaction manner. In an application-centric architecture mode, when a user wants to complete an intent task, the user may need to switch between a plurality of different applications. For example, for travel, the user needs to use a ticketing application to purchase an air ticket or a train ticket, a hotel booking application to book a hotel, and an alarm clock to add an alarm for reminding the travel.

In the application-centric manner, the user needs to manage different subtasks of an event in a plurality of different applications, and when there are a plurality of events at the same time, the events cannot be effectively managed.

A technical problem to be resolved in embodiments of this application is that in an existing operating system, in the application-centric manner, the user needs to manage different subtasks of an event in a plurality of different applications, and when there are a plurality of events at the same time, the events cannot be effectively managed.

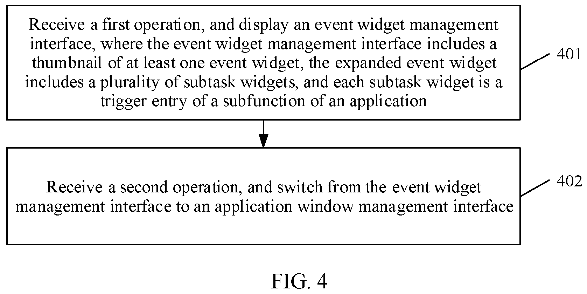

To resolve the foregoing problem, refer to FIG. 4. FIG. 4 is a schematic flowchart of an interface display method according to an embodiment of this application. As shown in FIG. 4, the interface display method provided in this embodiment of this application includes the following steps.

401: Receive a first operation, and display an event widget management interface, where the event widget management interface includes a thumbnail of at least one event widget, the expanded event widget includes a plurality of subtask widgets, and each subtask widget is a trigger entry of a subfunction of an application.

402: Receive a second operation, and switch from the event widget management interface to an application window management interface.

The following first describes a manner of starting the event widget management interface.

### Manner 1: Perform an operation on a preset control

The preset control may be a terminal assistant or a navigation bar.

In a possible implementation, the event widget management interface may be displayed by performing a first operation on the terminal assistant or the navigation bar.

For example, the terminal assistant is an AI assistant control. A user may perform a preset interaction operation with the AI assistant control, and several blocked widget groups are displayed on the back of the AI assistant control. After the widget groups appear, the user performs a slide-up gesture to start the event widget management interface. Alternatively, the user directly performs a slide-up gesture at a location of the AI assistant control, to start the event widget management interface.

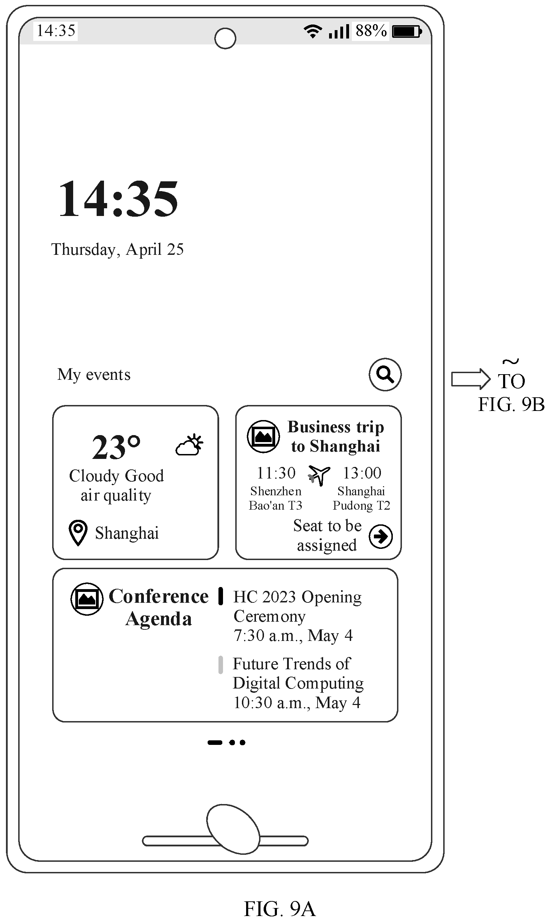

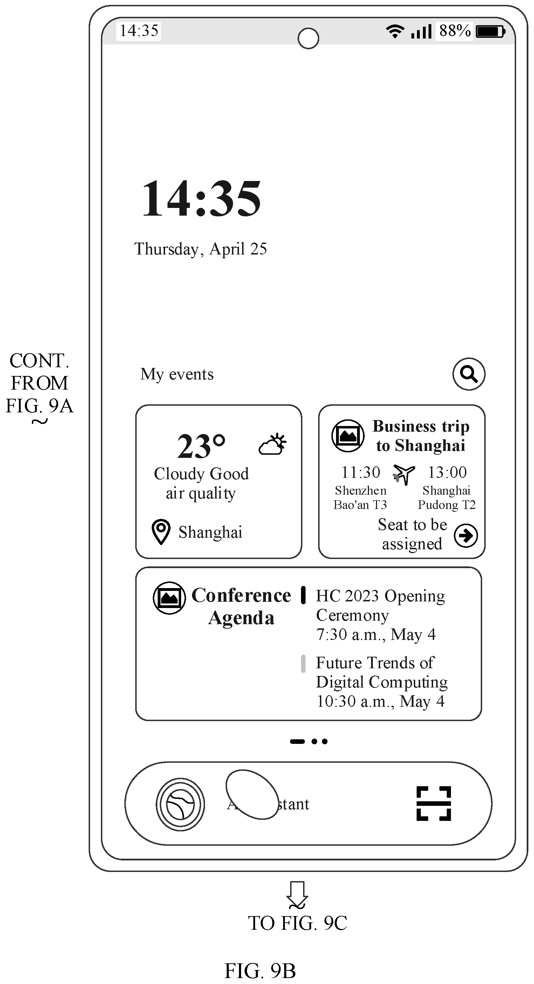

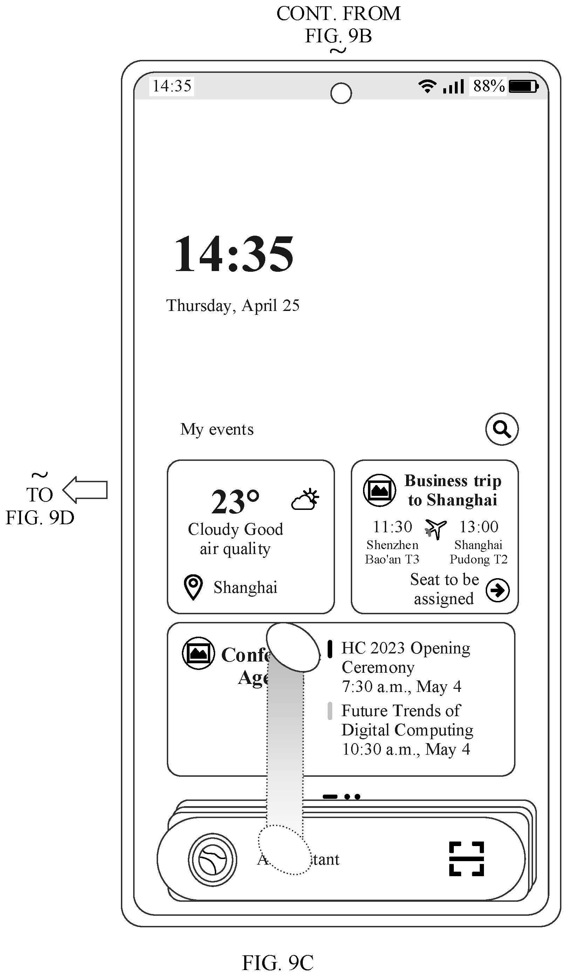

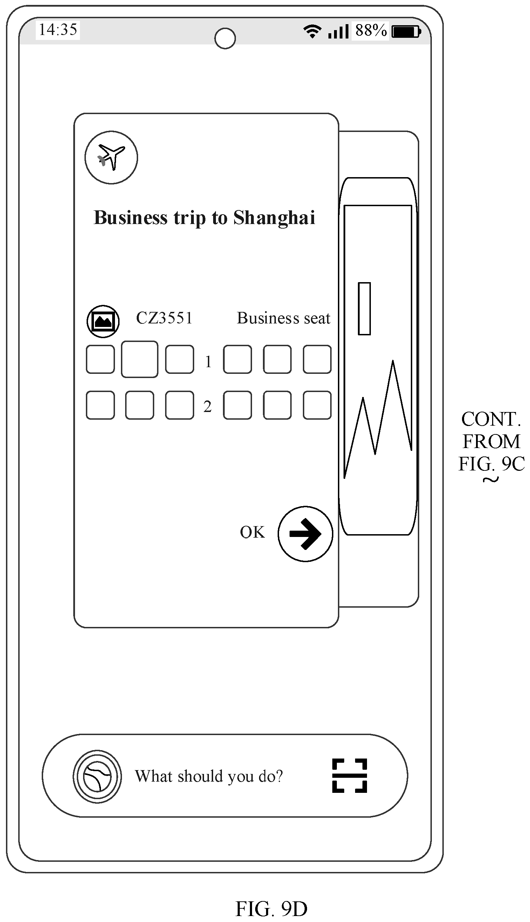

For example, as shown in FIG. 9A to FIG. 9D, the user may first tap the navigation bar to display the AI assistant control. Then, the user touches and holds the AI assistant control, and several stacked widgets are displayed on the back of the AI assistant control. Alternatively, the user touches and holds the navigation bar, the AI assistant control appears, and several stacked widgets are displayed on the back of the AI assistant control.

The stacked widgets on the back of the AI assistant control are event widgets, and a quantity of stacked widgets is the same as a quantity of event widgets. Then, the user performs the slide-up gesture, several stacked widgets on the back of the AI assistant control are expanded and displayed, and all existing event widgets are displayed, in other words, the event widget management interface is started. In this process, the widgets on the back of the AI assistant control may be moved to the middle of a screen with the assistance of animation display, to indicate that the widgets on the back of the AI assistant are widget thumbnails of the event widgets, and the event widgets in the event widget management interface are expanded from the widgets on the back of the AI assistant.

It should be understood that, when the AI assistant control is always displayed in the desktop, the user may directly interact with the AI assistant control, and does not need to perform an operation on the navigation bar to trigger the AI assistant control.

In a possible implementation, a first thumbnail of an event widget group and a first thumbnail of an application window group may be displayed by performing an operation on the terminal assistant or the navigation bar. The user may start the event widget management interface or the application window management interface by selecting different widget groups.

Specifically, in a possible implementation, the first thumbnail of the event widget group or the first thumbnail of the application window group may be displayed by performing the first operation on the terminal assistant or the navigation bar, and the user may select, by performing a switching operation, to start the event widget management interface or the application window management interface.

For example, the event widget management interface may be started by performing a selection operation on first indication information of the at least one event widget in the event widget group in a first interface.

For example, the first thumbnail of the application window group may be switched to the first indication information of the at least one event widget by performing a switching operation on the first thumbnail of the application window group in a second interface, and the event widget management interface may be started by performing a selection operation on the first thumbnail of the event widget group in the first indication information of the at least one event widget in the first interface.

The AI assistant is used as an example. In a possible implementation, after the touch and hold gesture and the slide-up gesture are performed on the AI assistant control, two widget groups are displayed: One is a widget group of event widgets (the widget group is not the event widget management interface, but a thumbnail of the event widget management interface), and the other is a window group of application windows (the window group is not the application window management interface, but a thumbnail of the application window management interface). The user may start the event widget management interface or the application window management interface by selecting different widget groups.

For example, the user may perform coherent gestures to complete the selection. After the user touches and holds the AI assistant control and then slides up, two widget groups are displayed in the interface. By default, the event widget group is displayed, and a part of the application window group may also be displayed. If the user holds on at a location of the event widget group, the event widget management interface is started. If the user slides right, the application window group is completely displayed, and the event widget group is not displayed or only partially displayed. Then, the user taps the application window group to start the application window management interface.

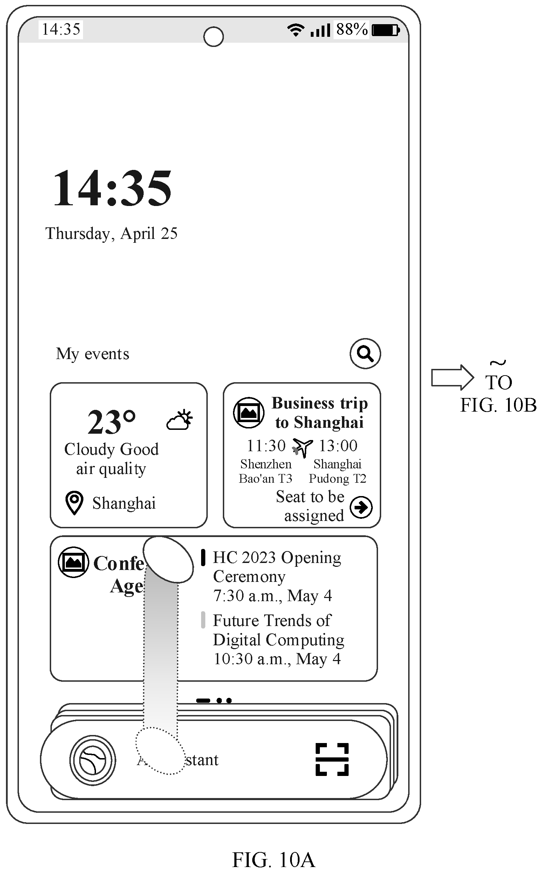

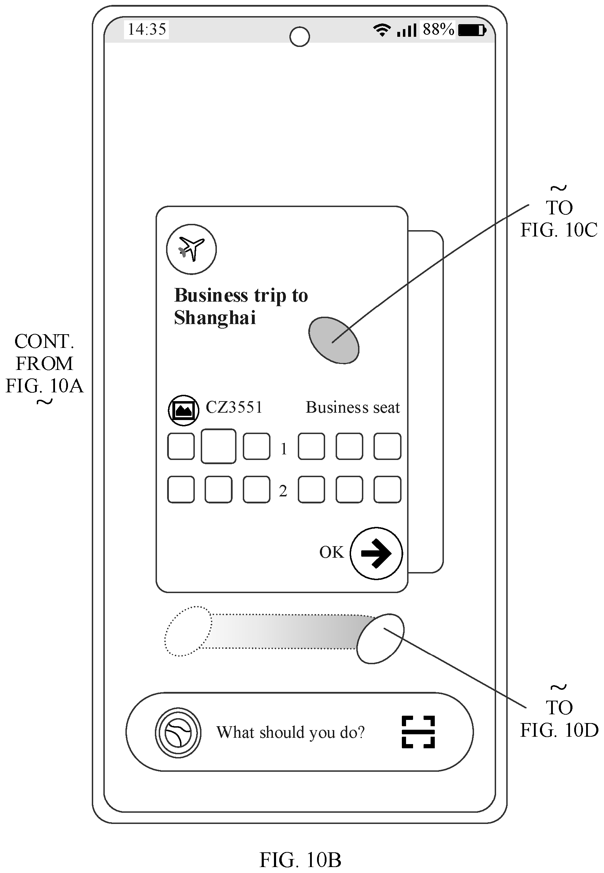

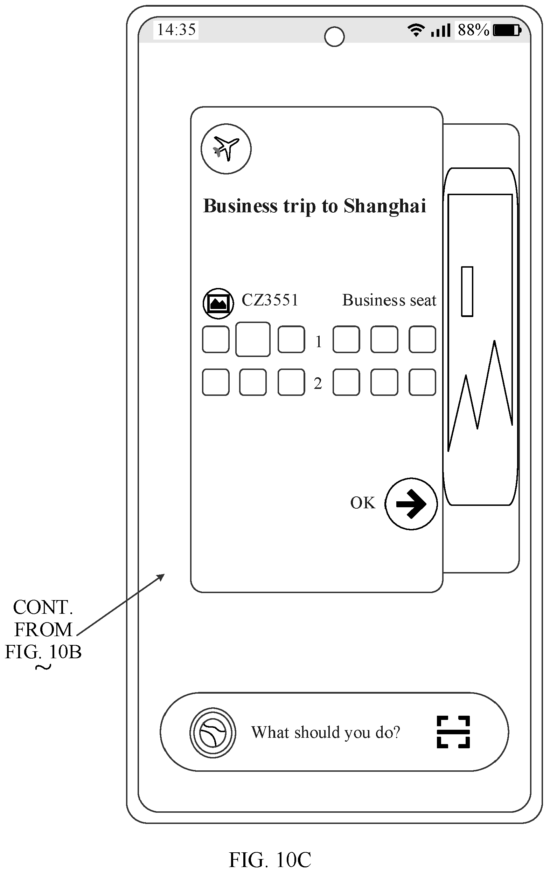

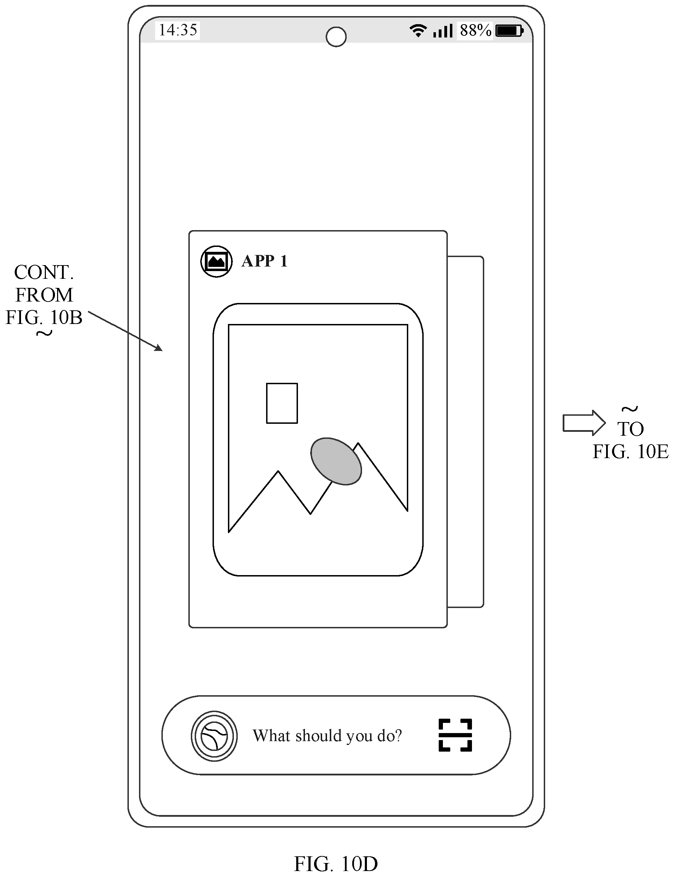

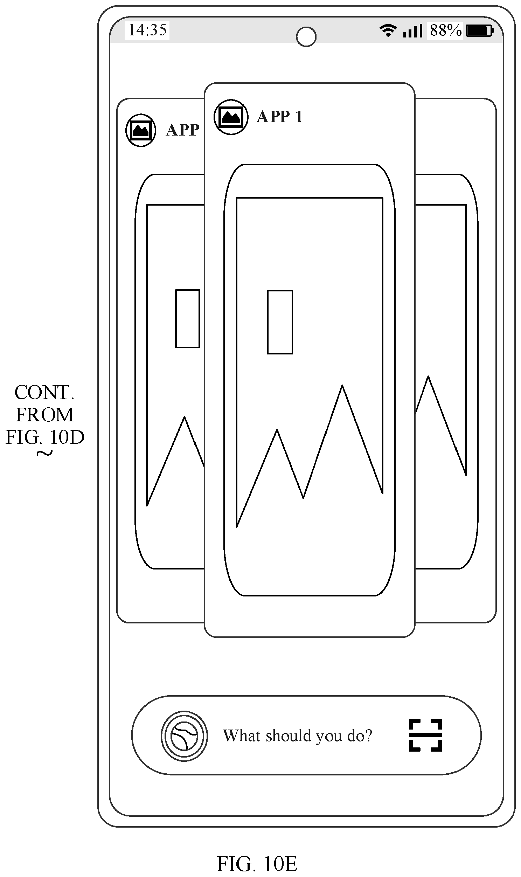

FIG. 10A to FIG. 10E show a case in which the event widget management interface and the application window management interface are separately started in a same operation path. After the user touches and holds an AI assistant control and then slides up, widget groups are displayed. The event widget group is displayed on a screen by default. After the user moves a touch point of the slide gesture to the event widget and then releases the slide gesture, or after the user releases the slide gesture and then taps the event widget group, the event widget management interface is started. This corresponds to the upper branch in FIG. 10A to FIG. 10E. After the user slides up and then continues to slide right, or after the user releases the slide-up gesture and then performs a slide-right gesture, the event widget group is moved right, and the application window group is gradually displayed. The user taps the application window group, to start the application window management interface. This corresponds to the lower branch in FIG. 10A to FIG. 10E.

In a possible implementation, to prompt the user that the thumbnail of the application window management interface and the thumbnail of the event widget management interface can be switched between each other, a thumbnail of the event widget group may also be displayed in the interface in which the thumbnail of the application window management interface is displayed (compared with the thumbnail of the application window management interface, the thumbnail of the event widget management interface is inconspicuous, for example, may be arranged after the thumbnail of the application window management interface).

For example, the first interface may be displayed. The first interface may include the first thumbnail of the event widget group in the first indication information of the at least one event widget and second indication information of the application window group, and the second indication information of the application window group is arranged after the first thumbnail of the event widget group in the first indication information of the at least one event widget. After a switching operation on the first thumbnail of the application window group in the second interface is received, the first interface may be switched to the second interface. The second interface includes the first thumbnail of the application window group and second indication information of the at least one event widget, and the second indication information of the at least one event widget is arranged after the first thumbnail of the application window group.

FIG. 12A-1 and FIG. 12A-2 separately show an interface of the thumbnail of the application window group and an interface of the thumbnail of the event widget group. Both the thumbnail of the application window group and the thumbnail of the event widget group have two layers of widgets, and the two layers of widgets respectively correspond to the thumbnail of the application window group and the thumbnail of the event widget group, and are arranged in front and back in a line of sight direction. In the interface of the thumbnail of the event widget group, an event widget list is located in front and occupies a large display area, and an application window list is located behind. In the interface of the thumbnail of the event widget group, an application window list is located in front and occupies a large display area, and an event widget list is located behind.

When a slide-up gesture is performed in a blank region in the thumbnail of the application window group or a blank region in the thumbnail of the event widget group (or a display region of the AI assistant control) in FIG. 12A-1 and FIG. 12A-2, the thumbnail of the application window group and the thumbnail of the event widget group may be switched between each other.

In FIG. 12A-1 and FIG. 12A-2, the application window group in the event widget management interface may not support interaction, to be specific, when a slide operation is performed in a region of the thumbnail of the application window group, application windows in the application window group do not change. Correspondingly, the event widget group in the application window management interface may either not support interaction, to be specific, when a slide operation is performed in a region of the thumbnail of the event widget group, event windows in the event widget group do not change. Certainly, the application window group in the event widget management interface and the event widget group in the application window management interface may alternatively be designed to support interaction. When the interaction is supported, the application windows in the application window group or the event widgets in the event widget group are moved left or right by sliding left or right.

Although the interface of the thumbnail of the application window group and the interface of the thumbnail of the event widget group are described as two interfaces in the foregoing description, it can be seen from FIG. 12A-1 and FIG. 12A-2 that the two interfaces are essentially two different-focus content presentations of one interface. Therefore, in other descriptions, the two interfaces may alternatively be described as two forms that are of one interface and that are switched between.

In the examples of the foregoing embodiments, the desktop is used as an example for illustration. In an in-application scenario, the AI assistant control is still used as an example. As a system-level global control, the AI assistant control may be displayed in a preset interaction manner, so that the event widget management interface is started through interaction with the AI assistant control. For example, a navigation bar is generally configured at the bottom of a full-screen mobile phone. The AI assistant control is displayed through interaction with the navigation bar (for example, the navigation bar is replaced with the AI assistant control, or the AI assistant control is displayed over the navigation bar). When the AI assistant control is displayed in an interface of an application, at least one event widget may be further displayed, for example, displayed in a small window.

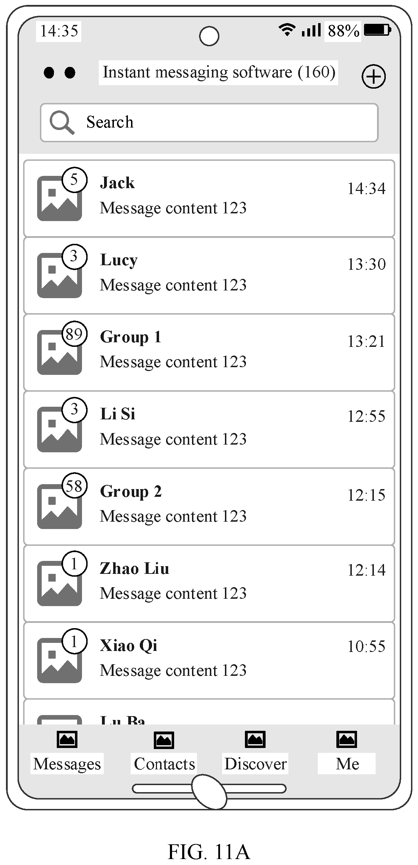

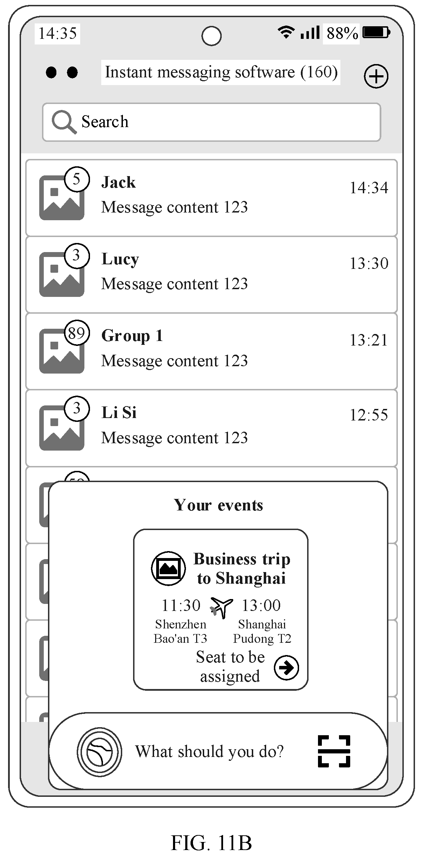

In FIG. 11A and FIG. 11B, in an instant messaging software interface, the user touches and holds the navigation bar at the bottom to display the AI assistant control, and a newly created or recently started event widget is displayed in a small window. After the event widget is displayed, the user may interact with the AI assistant control. After the user performs preset operations such as touching and holding and sliding up, the event widget management interface is started to perform an event widget management function.

### Manner 2: Perform an operation of sliding up from a bottom of a desktop of the interface

It should be understood that, similar to an existing application window management interface, the event widget management interface may be triggered for display by performing the operation of sliding up from the bottom of the desktop of the interface.

The system may provide a preset gesture. When the user slides up from the bottom of the desktop, if a slide-up distance is within a preset range, the event widget management interface is started.

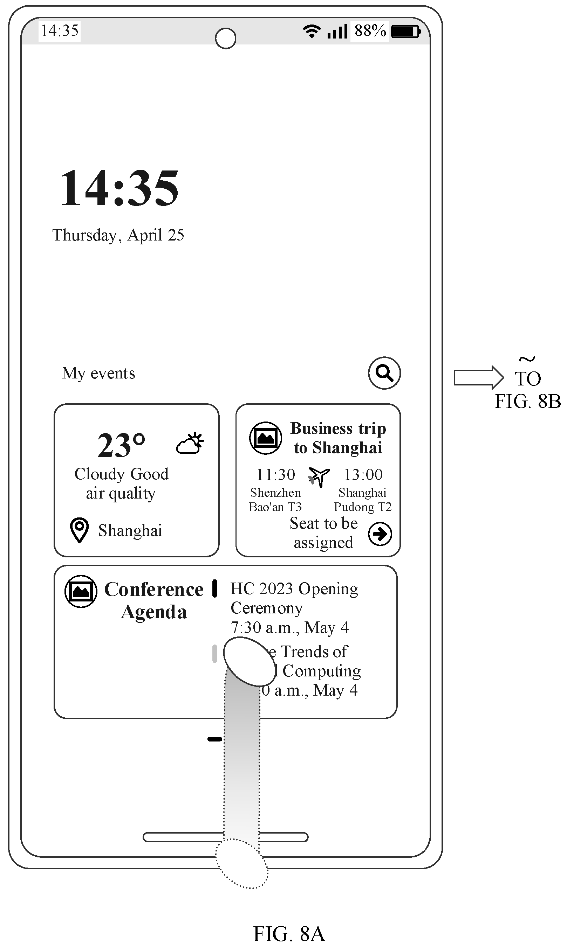

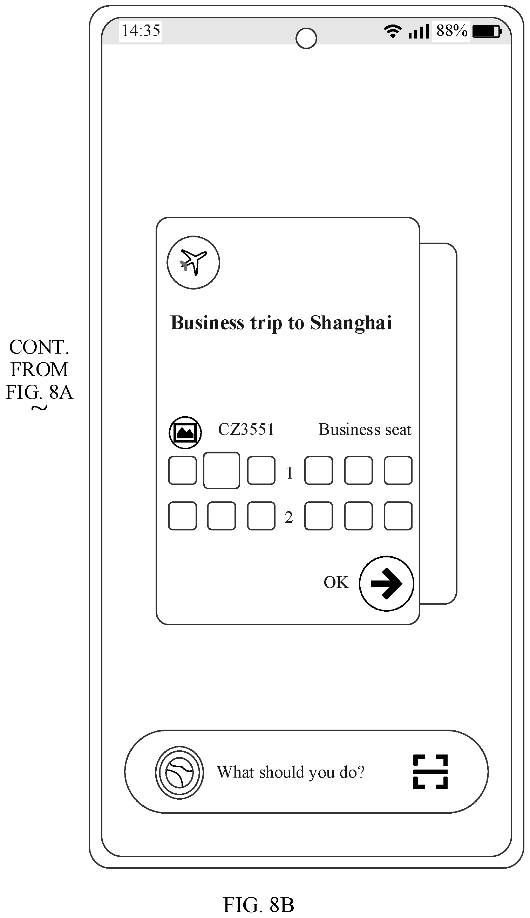

As shown in FIG. 8A and FIG. 8B, the user slides up from the bottom of the screen. If the slide-up distance is within the preset range, the desktop switches from a home screen to the event widget management interface. In this case, an animation transition may be used. For example, event widgets in an event widget list gradually appear from the bottom and move to a preset region in the screen with the slide-up gesture.

In some cases, when an event includes a single task, the user also has a requirement for using a single application. For example, for a reading event, the user needs to use only a single reading app. Therefore, the user also needs to start application management through a multi-application management interface.

Therefore, in an operating system, there are both event-centric and application-centric requirements. For an existing full-screen gesture, when the user slides up from the bottom of the screen, and a slide-up distance meets a preset threshold, the application window management interface is started.

In the solution of the present invention, the user slides up from the bottom, and whether to start the event widget management interface or the application window management interface is determined based on a slide-up distance. For example, three thresholds x1, x2, and x3 are separately defined. If the slide-up distance is within a range (x1, x2), the event widget management interface is started. If the slide-up distance is within a range (x2, x3), the application window management interface is started, and a list of application windows that are currently running in the operating system is displayed in the application window management interface.

In a possible implementation, in addition to a current event widget, an application window list is further displayed in the event widget management interface, and the event widget management interface can be switched to the application window management interface by performing a preset operation. Correspondingly, an event widget group is also displayed in the application window management interface, and the application window management interface can be switched to the event widget management interface by performing a preset operation.

For example, in a possible implementation, the first operation of the user may be received, and a thumbnail of the event widget management interface is displayed (or the event widget management interface is directly displayed), where the first operation is specifically a slide operation on a preset control, and an effective distance of the slide operation in the first operation is within a first preset range (for example, (x1, x2)). A third operation of the user may be further received, and a second interface is displayed, where the second interface includes a thumbnail of the application window management interface (or the application window management interface is directly displayed), the third operation is a slide operation on a preset control, and an effective distance of the slide operation in the third operation is within a second preset range (for example, (x2, x3)).

The foregoing describes the manner of starting the event widget management interface and the manner of switching between the event widget management interface and the application window management interface. The following describes another operation related to the event widget management interface.

In a possible implementation, the event widget may be managed in the event widget management interface. If a contact is placed on an event widget and a slide-up gesture is performed, the event widget is deleted. If a slide-up distance is insufficient, the event widget automatically bounces back to the event widget list. After the deletion is performed, the event widget is deleted from the system, and the event widget is no longer displayed in the home screen.

In a possible implementation, an event widget may be selected, and the event widget may be started. Optionally, display content after the event widget is selected may be the same as a result of tapping the event widget in the desktop. A difference lies in that, in the event widget management interface, a thumbnail of the event widget is displayed, and content of the event widget may be previewed, and key information is previewed in the desktop.

In a possible implementation, an event widget may be touched and held, and then the event widget may be added to the desktop. To be specific, a selection (for example, a touch and hold operation) for a thumbnail of a target event widget in the at least one event widget in the event widget management interface is received, and the thumbnail of the target event widget is added to the system desktop for display.

In a possible implementation, a display status of a thumbnail of an event widget in the event widget management interface is related to a completion degree of a subtask widget in the event widget. For example, the display status is a color or transparency.

The event widget may further use different colors/transparency to indicate an execution status of an event corresponding to the event widget. When a task corresponding to a task widget in the event widget is executed, a change of corresponding transparency may be triggered. For example, event progresses of 0, 25%, 50%, 75%, and 100% can be respectively defined, corresponding to different transparency from opaque to fully transparent. When a subtask corresponding to a task widget is completed, if a corresponding ratio is reached, a transparent state of the widget is changed.

In a possible implementation, the event widget may further display a type of the event widget by using a badge. For example, events corresponding to event widgets are classified into long-term events and short-term events based on a quantity of included subtasks, a corresponding time span, and the like, and different types are represented by using different badges.

Similar to the application window management interface, the event widget management interface may present thumbnails of one or more event widgets that have been created currently. However, different from the application window management interface, the event widgets are added to the event widget management interface immediately after being created, and can be viewed in the event widget management interface, instead of viewing only an event widget that has been started currently or in a historical time period. Optionally, in the event widget management interface, a plurality of event widgets may be stacked with each other. As the user slides, different event widgets may be switched and moved to the middle of the interface and displayed at the top layer.

In embodiments of this application, the operating system presents information to the user by using an event as a dimension. Therefore, the operating system also provides an event management interface (namely, the event widget management interface in embodiments of this application), and all event widgets that are created by the user and that are not destroyed currently are displayed in the event widget management interface. Optionally, if all subtask widgets in an event widget are completed, the event widget may be automatically destroyed by the system, or the destruction of the event widget is triggered after the user performs a preset operation on the event widget.

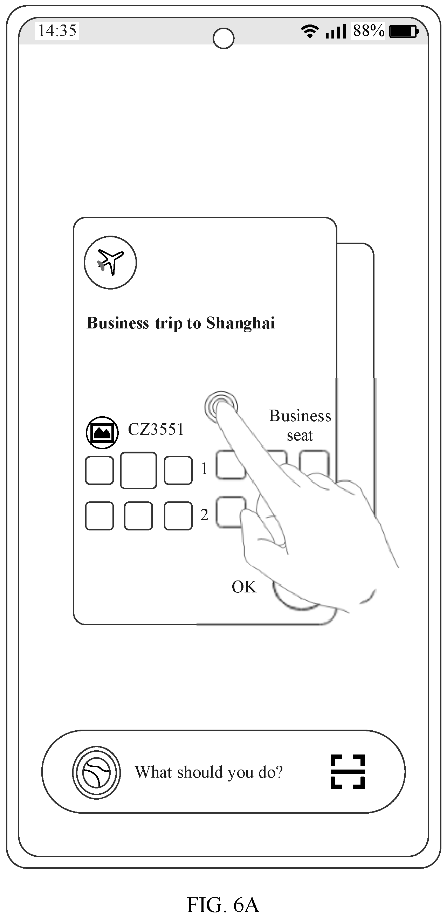

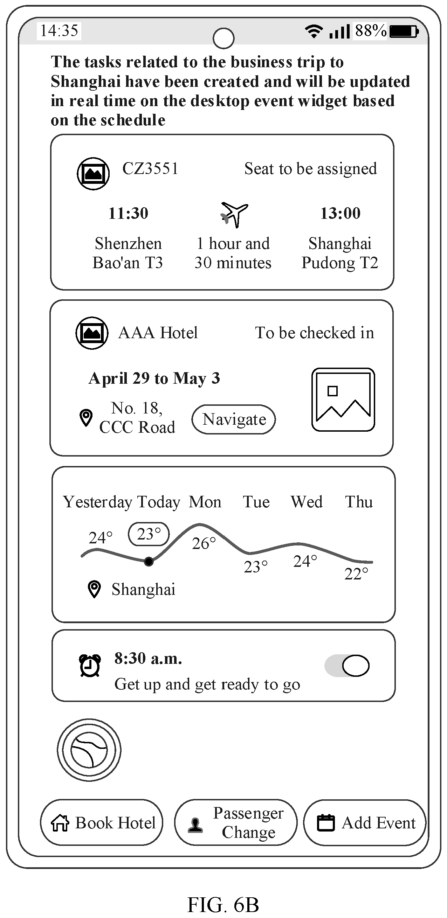

For example, FIG. 6A and FIG. 6B separately show an event widget management interface and an expanded event widget. In the event widget management interface in FIG. 6A and FIG. 6B, two stacked event widgets are displayed. As shown in FIG. 6A and FIG. 6B, after an event widget of a business trip to Shanghai is tapped in the event widget management interface, the event widget is expanded (in this case, a system task is still a desktop application), and a plurality of subtask widgets included in the event widget are displayed. The subtask widgets in FIG. 6A and FIG. 6B include a flight widget, an accommodation widget, a weather widget, and an alarm clock widget. The four subtask widgets are all subtasks directly related to the business trip to Shanghai, and serve an event of the business trip to Shanghai.

Through a selection for an event widget corresponding to a to-do event in the event widget management interface, the event widget may be displayed. The event widget corresponding to the to-do event includes a plurality of subtask widgets and indication information of the to-do event; and each subtask widget is a trigger entry of a subfunction of an application, and the event widget corresponding to the to-do event indicates that the plurality of subtask widgets are associated with the to-do event.

The event widget corresponding to the to-do event is a page that is managed at a granularity of a plurality of subtasks associated with the to-do event.

The event in embodiments of this application may be a combination of a plurality of subtasks. In other words, the event may be a target that the user needs to implement, and the subtask is a specific means for implementing the target. In the conventional technology, a granularity of event management performed by the user is a subtask.

For example, the to-do event may be a business trip, and the subtasks associated with the to-do event may include booking an air ticket, booking a hotel, setting an alarm clock, querying weather of a destination, and the like.

In an existing implementation, to implement a to-do event, the user needs to separately start a plurality of applications to execute different subtasks. For example, the user starts an air ticket booking application to execute an air ticket booking task, a hotel booking application to execute a hotel booking task, and a weather query application to execute a destination weather query task.

In embodiments of this application, a plurality of subtask widgets may be aggregated in one event widget, and each subtask widget is used as a trigger entry of a subfunction of an application. When a corresponding subtask widget is selected, a terminal can jump to a corresponding application. In this case, the application corresponding to the subtask widget may be started and run on the frontend. In the foregoing manner, the user can perform an operation at a granularity of a subtask of an event. During event management, the user does not need to start different applications, but directly selects a subtask under the event widget to trigger the corresponding application. This reduces operation costs of the user.

It should be understood that functions implemented by different subtask widgets may be subfunctions of different applications, or different subfunctions of a same application.

For example, a subtask widget A is a subfunction A of an application A, and a subtask widget B is a subfunction B of an application B.

Alternatively, for example, a subtask widget A is a subfunction A of an application A, and a subtask widget B is a subfunction B of the application A.

It should be understood that the application in embodiments of this application may be an application installed on the terminal, or may be an application in another form, for example, an H5 application on a cloud side. This is not limited in this application.

In a possible implementation, information about the to-do event may be the event widget, and the event widget may indicate, by aggregating a plurality of subtasks, that the plurality of subtask widgets are associated with the to-do event. To indicate the to-do event, the indication information of the to-do event may be displayed. For example, the to-do event is indicated by using a text of the to-do event as a title.

For example, FIG. 6A and FIG. 6B separately show an event widget management interface and an expanded event widget. In the event widget management interface in FIG. 6A and FIG. 6B, two stacked event widgets are displayed. As shown in FIG. 6A and FIG. 6B, after an event widget of a business trip to Shanghai is tapped in the event widget management interface, the event widget is expanded (in this case, a system task is still a desktop application), and a plurality of subtask widgets included in the event widget are displayed. The subtask widgets in FIG. 6A and FIG. 6B include a flight widget, an accommodation widget, a weather widget, and an alarm clock widget. The four subtask widgets are all subtasks directly related to the business trip to Shanghai, and serve an event of the business trip to Shanghai.

FIG. 12I is a schematic flowchart of a display method. The method includes the following steps.

1201: Display an event widget corresponding to a to-do event, where the event widget corresponding to the to-do event includes a plurality of subtask widgets and indication information of the to-do event; and each subtask widget is a trigger entry of a subfunction of an application, and the event widget corresponding to the to-do event indicates that the plurality of subtask widgets are associated with the to-do event.

The event widget corresponding to the to-do event is a page that is managed at a granularity of a plurality of subtasks associated with the to-do event.

The event in embodiments of this application may be a combination of a plurality of subtasks. In other words, the event may be a target that the user needs to implement, and the subtask is a specific means for implementing the target. In the conventional technology, a granularity of event management performed by the user is a subtask.

For example, the to-do event may be a business trip, and the subtasks associated with the to-do event may include booking an air ticket, booking a hotel, setting an alarm clock, querying weather of a destination, and the like.

In an existing implementation, to implement a to-do event, the user needs to separately start a plurality of applications to execute different subtasks. For example, the user starts an air ticket booking application to execute an air ticket booking task, a hotel booking application to execute a hotel booking task, and a weather query application to execute a destination weather query task.

In embodiments of this application, a plurality of subtask widgets may be aggregated in one event widget, and each subtask widget is used as a trigger entry of a subfunction of an application. When a corresponding subtask widget is selected, a terminal can jump to a corresponding application. In this case, the application corresponding to the subtask widget may be started and run on the frontend. In the foregoing manner, the user can perform an operation at a granularity of a subtask of an event. During event management, the user does not need to start different applications, but directly selects a subtask under the event widget to trigger the corresponding application. This reduces operation costs of the user.

It should be understood that functions implemented by different subtask widgets may be subfunctions of different applications, or different subfunctions of a same application.

For example, a subtask widget A is a subfunction A of an application A, and a subtask widget B is a subfunction B of an application B.

Alternatively, for example, a subtask widget A is a subfunction A of an application A, and a subtask widget B is a subfunction B of the application A.

It should be understood that the application in embodiments of this application may be an application installed on the terminal, or may be an application in another form, for example, an H5 application on a cloud side. This is not limited in this application.

In a possible implementation, information about the to-do event may be the event widget, and the event widget may indicate, by aggregating a plurality of subtasks, that the plurality of subtask widgets are associated with the to-do event. To indicate the to-do event, the indication information of the to-do event may be displayed. For example, the to-do event is indicated by using a text of the to-do event as a title.

The event widget corresponding to the to-do event may be an expanded interface of the event widget. The following describes how to start the event widget.

### Manner 1: Perform a preset operation on an event widget thumbnail in a system desktop

In a possible implementation, one or more event widget thumbnails (including the event widget corresponding to the to-do event) may be displayed in the system desktop. The user may select an event widget thumbnail, so that the event widget is completely displayed, and the subtask widget in the event widget is expanded and displayed. The event widget is not a loose widget container, but a set of a plurality of subtask widgets that are closely associated with the same event.

The event widget thumbnail may display information (or key information, for example, indication information, based on which the user may know which subtasks are included in the event widget) about the included subtasks. Optionally, the event widget thumbnail may display information about at least one subtask widget, and can change with time. For example, preview information of all subtask widgets included in the current event widget thumbnail is displayed in turn. The preview information may be directly displaying the task widget, or may be extracting key information of the subtask widget and then re-typesetting for display.

The event widget is a widget container provided by the desktop. When the user taps the event widget thumbnail and the event widget is expanded, an application running on the frontend is still the desktop. When the user performs a preset operation on a subtask widget in the event widget, an application that provides the subtask widget may be displayed. In this case, the application corresponding to the subtask widget is started and run on the frontend.

In a possible implementation, the system desktop may not display an application icon of an application installed on the system, but display several event widget thumbnails in the desktop (or display both the application icon and the event widget). In the system desktop, one or more event widget thumbnails corresponding to different events may be displayed in an event dimension.

It should be understood that, because the user may have a same subtask requirement in different events, different event widgets may have a same task widget. For example, the user goes on a business trip to a place, but there is a travel arrangement in the middle. An event widget is created for the business trip and an event widget is created for the travel. In the two event widgets, the user wants to view the weather. Therefore, a weather subtask widget may exist in both the event widget for the business trip and the event widget for the travel.

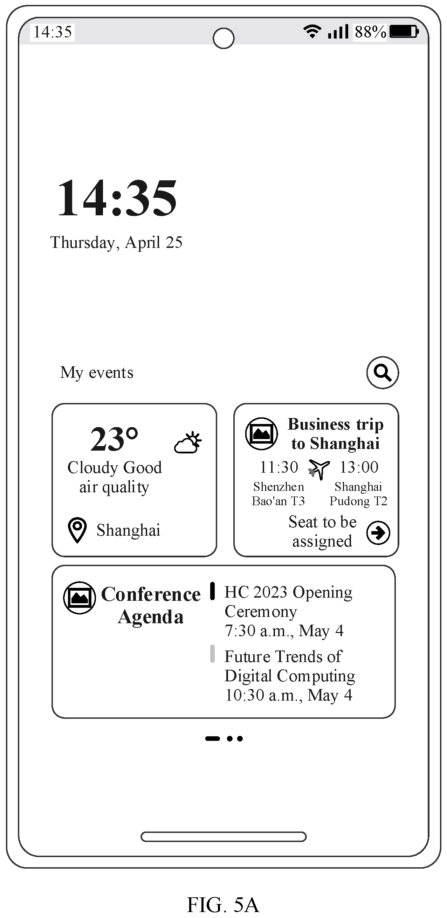

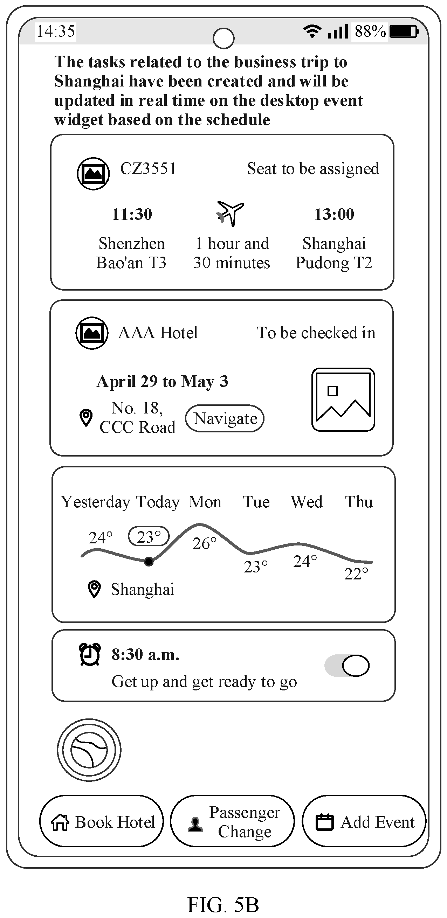

FIG. 5A and FIG. 5B separately show a system desktop interface and an expanded event widget. In the system desktop in FIG. 5A and FIG. 5B, two event widget thumbnails are displayed, which respectively correspond to two events (an event of a business trip to Shanghai and an HC conference event). However, no app icon is displayed. The event widget thumbnail displays information about at least one subtask widget, and can change with time. For example, preview information of all subtask widgets included in the current event widget is displayed in turn. The preview information may be directly displaying the subtask widget, or may be extracting key information of the subtask widget and then re-typesetting for display. In addition to the event widget, the system desktop may also add an interaction entry of a conventional widget or a widget, for example, a weather widget in FIG. 5A and FIG. 5B.

As shown in FIG. 5A and FIG. 5B, after the event widget of the business trip to Shanghai is tapped, the event widget is expanded (in this case, a system task is still a desktop application), and a plurality of subtask widgets included in the event widget are displayed. The subtask widgets in FIG. 5A and FIG. 5B include a flight widget, an accommodation widget, a weather widget, and an alarm clock widget. The four subtask widgets are all subtasks directly related to the event of the business trip to Shanghai, and serve the event of the business trip to Shanghai.

### Manner 2: Select an event widget in the event widget management interface

Similar to the application window management interface, the event widget management interface may present thumbnails of one or more event widgets that have been created currently. However, different from the application window management interface, the event widgets are added to the event widget management interface immediately after being created, and can be viewed in the event widget management interface, instead of viewing only an event widget that has been started currently or in a historical time period. Optionally, in the event widget management interface, a plurality of event widgets may be stacked with each other. As the user slides, different event widgets may be switched and moved to the middle of the interface and displayed at the top layer.

In embodiments of this application, the operating system presents information to the user by using an event as a dimension. Therefore, the operating system also provides an event management interface (namely, the event widget management interface in embodiments of this application), and all event widgets that are created by the user and that are not destroyed currently are displayed in the event widget management interface. Optionally, if all subtask widgets in an event widget are completed, the event widget may be automatically destroyed by the system, or the destruction of the event widget is triggered after the user performs a preset operation on the event widget.

For example, FIG. 6A and FIG. 6B separately show an event widget management interface and an expanded event widget. In the event widget management interface in FIG. 6A and FIG. 6B, two stacked event widgets are displayed. As shown in FIG. 6A and FIG. 6B, after an event widget of a business trip to Shanghai is tapped in the event widget management interface, the event widget is expanded (in this case, a system task is still a desktop application), and a plurality of subtask widgets included in the event widget are displayed. The subtask widgets in FIG. 6A and FIG. 6B include a flight widget, an accommodation widget, a weather widget, and an alarm clock widget. The four subtask widgets are all subtasks directly related to the business trip to Shanghai, and serve an event of the business trip to Shanghai.

How to start the event widget management interface is described in subsequent embodiments.

### Manner 3: Perform an operation on a preset control

The preset control may be a terminal assistant (for example, an AI assistant, and for ease of description, the terminal assistant is described as the AI assistant in the following embodiments) or a navigation bar.

For example, a navigation bar is generally configured at the bottom of a full-screen mobile phone. The AI assistant control may be displayed through interaction with the navigation bar (for example, the navigation bar is replaced with the AI assistant control, or the AI assistant control is displayed over the navigation bar). When the AI assistant control is displayed in an interface of an application, at least one event widget may be further displayed, for example, displayed in a small window. The AI assistant control may be always displayed in the desktop, or may be displayed after a preset operation is performed. For example, the navigation bar is always displayed at the bottom of the screen, and the AI assistant control is displayed by performing an operation on the navigation bar (for example, touching and holding the navigation bar). In this application, the AI assistant control may replace the navigation bar. To be specific, after the AI assistant control is displayed, the navigation bar may no longer be displayed, or it may be considered that the AI assistant control is displayed on an upper layer of the navigation bar.

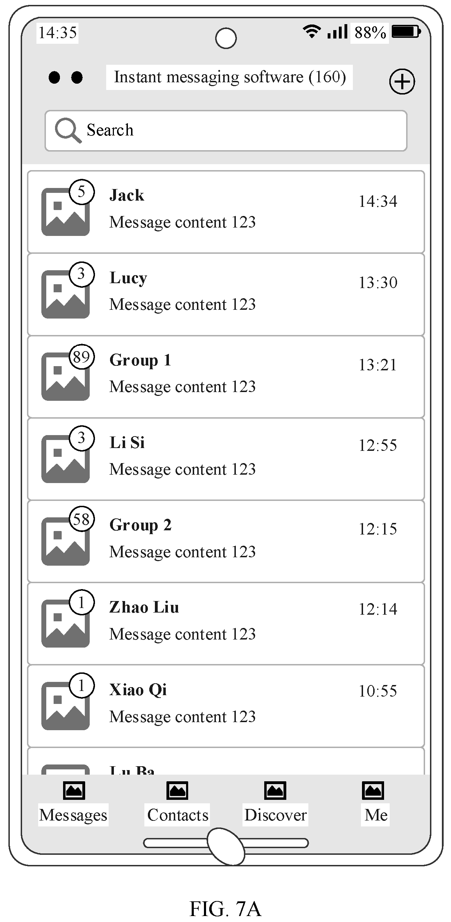

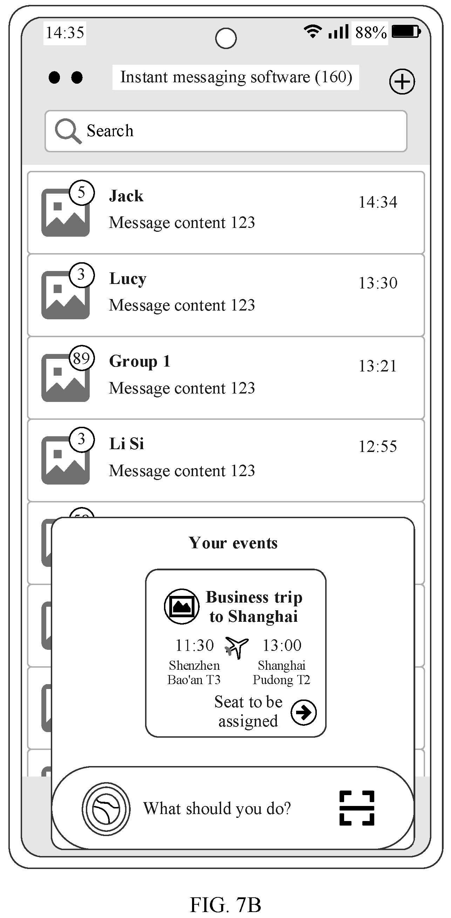

In FIG. 7A and FIG. 7B, the user touches and holds the navigation bar at the bottom to display the AI assistant control, and a newly created or recently started event widget is displayed in a small window. After the event widget is displayed, the user may tap the event widget to start the event widget corresponding to the to-do event.

In a possible implementation, a fourth operation may be received, and the event widget corresponding to the to-do event is displayed in response to the fourth operation. The fourth operation is selecting a thumbnail of the event widget corresponding to the to-do event in the system desktop or the event widget management interface, and the system desktop or the event widget management interface includes at least one event widget thumbnail including the to-do event; or the fourth operation is the operation on the preset control, and the preset control is the terminal assistant or the navigation bar.

The event widget management interface is described in the foregoing embodiments. The interface may include at least one event widget. The user may select an event widget in the event widget management interface to start a subtask widget of a corresponding event, or edit the event widget in the event widget management interface (an editing process is described in subsequent embodiments).

In a possible implementation, a first operation may be received, and the event widget management interface is displayed. The following first describes a manner of starting the event widget management interface.

### Manner 1: Perform an operation on a preset control

The preset control may be a terminal assistant or a navigation bar.

In a possible implementation, the event widget management interface may be displayed by performing a first operation on the terminal assistant or the navigation bar.

For example, the terminal assistant is an AI assistant control. A user may perform a preset interaction operation with the AI assistant control, and several blocked widget groups are displayed on the back of the AI assistant control. After the widget groups appear, the user performs a slide-up gesture to start the event widget management interface. Alternatively, the user directly performs a slide-up gesture at a location of the AI assistant control, to start the event widget management interface.

For example, as shown in FIG. 9A to FIG. 9D, the user may first tap the navigation bar to display the AI assistant control. Then, the user touches and holds the AI assistant control, and several stacked widgets are displayed on the back of the AI assistant control. Alternatively, the user touches and holds the navigation bar, the AI assistant control appears, and several stacked widgets are displayed on the back of the AI assistant control.

The stacked widgets on the back of the AI assistant control are event widgets, and a quantity of stacked widgets is the same as a quantity of event widgets. Then, the user performs the slide-up gesture, several stacked widgets on the back of the AI assistant control are expanded and displayed, and all existing event widgets are displayed, in other words, the event widget management interface is started. In this process, the widgets on the back of the AI assistant control may be moved to the middle of a screen with the assistance of animation display, to indicate that the widgets on the back of the AI assistant are widget thumbnails of the event widgets, and the event widgets in the event widget management interface are expanded from the widgets on the back of the AI assistant.

It should be understood that, when the AI assistant control is always displayed in the desktop, the user may directly interact with the AI assistant control, and does not need to perform an operation on the navigation bar to trigger the AI assistant control.

In a possible implementation, a first thumbnail of an event widget group and a first thumbnail of an application window group may be displayed by performing an operation on the terminal assistant or the navigation bar. The user may start the event widget management interface or the application window management interface by selecting different widget groups.

Specifically, in a possible implementation, the first thumbnail of the event widget group or the first thumbnail of the application window group may be displayed by performing the first operation on the terminal assistant or the navigation bar, and the user may select, by performing a switching operation, to start the event widget management interface or the application window management interface.

For example, the event widget management interface may be started by performing a selection operation on the first thumbnail of the event widget group in the first indication information of the at least one event widget in the first interface.

For example, the first thumbnail of the application window group may be switched to the first thumbnail of the event widget group in the first indication information of the at least one event widget by performing a switching operation on the first thumbnail of the application window group in a second interface, and the event widget management interface may be started by performing a selection operation on the first thumbnail of the event widget group in the first indication information of the at least one event widget in the first interface.

The AI assistant is used as an example. In a possible implementation, after the touch and hold gesture and the slide-up gesture are performed on the AI assistant control, two widget groups are displayed: One is a widget group of event widgets (the widget group is not the event widget management interface, but a thumbnail of the event widget management interface), and the other is a window group of application windows (the window group is not the application window management interface, but a thumbnail of the application window management interface). The user may start the event widget management interface or the application window management interface by selecting different widget groups.

For example, the user may perform coherent gestures to complete the selection. After the user touches and holds the AI assistant control and then slides up, two widget groups are displayed in the interface. By default, the event widget group is displayed, and a part of the application window group may also be displayed. If the user holds on at a location of the event widget group, the event widget management interface is started. If the user slides right, the application window group is completely displayed, and the event widget group is not displayed or only partially displayed. Then, the user taps the application window group to start the application window management interface.

FIG. 10A to FIG. 10E show a case in which the event widget management interface and the application window management interface are separately started in a same operation path. After the user touches and holds an AI assistant control and then slides up, widget groups are displayed. The event widget group is displayed on a screen by default. After the user moves a touch point of the slide gesture to the event widget and then releases the slide gesture, or after the user releases the slide gesture and then taps the event widget group, the event widget management interface is started. This corresponds to the upper branch in FIG. 10A to FIG. 10E. After the user slides up and then continues to slide right, or after the user releases the slide-up gesture and then performs a slide-right gesture, the event widget group is moved right, and the application window group is gradually displayed. The user taps the application window group, to start the application window management interface. This corresponds to the lower branch in FIG. 10A to FIG. 10E.

In a possible implementation, to prompt the user that the thumbnail of the application window management interface and the thumbnail of the event widget management interface can be switched between each other, a thumbnail of the event widget group may also be displayed in the interface in which the thumbnail of the application window management interface is displayed (compared with the thumbnail of the application window management interface, the thumbnail of the event widget management interface is inconspicuous, for example, may be arranged after the thumbnail of the application window management interface).

For example, the first interface may be displayed. The first interface may include the first thumbnail of the event widget group in the first indication information of the at least one event widget and second indication information of the application window group, and the second indication information of the application window group is arranged after the first thumbnail of the event widget group in the first indication information of the at least one event widget. After a switching operation on the first thumbnail of the application window group in the second interface is received, the first interface may be switched to the second interface. The second interface includes the first thumbnail of the application window group and second indication information of the at least one event widget, and the second indication information of the at least one event widget is arranged after the first thumbnail of the application window group.

FIG. 12A-1 and FIG. 12A-2 separately show an event widget management interface and an application window management interface. Both the event widget management interface and the application window management interface have two layers of widgets. The two layers of widgets respectively correspond to a thumbnail of an application window group and a thumbnail of an event widget group, and are arranged in front and back in a line of sight direction. In the event widget management interface, an event widget list is located in front and occupies a large display area, and an application window list is located behind. In the application window management interface, the application window list is located in front and occupies a large display area, and the event widget list is located behind.

When a slide-up gesture is performed in a blank region (or a display region of the AI assistant control) in the event widget management interface and the application window management interface in FIG. 12A-1 and FIG. 12A-2, the event widget management interface and the application window management interface may be switched between each other.

In FIG. 12A-1 and FIG. 12A-2, the application window group in the event widget management interface may not support interaction, to be specific, when a slide operation is performed in a region of the thumbnail of the application window group, application windows in the application window group do not change. Correspondingly, the event widget group in the application window management interface may either not support interaction, to be specific, when a slide operation is performed in a region of the thumbnail of the event widget group, application windows in the event widget group do not change. Certainly, the application window group in the event widget management interface and the event widget group in the application window management interface may alternatively be designed to support interaction. When the interaction is supported, the application windows in the application window group or the event widgets in the event widget group are moved left or right by sliding left or right.

Although the application window management interface and the event widget management interface are described as two interfaces in the foregoing description, it can be seen from FIG. 12A-1 and FIG. 12A-2 that the two interfaces are essentially two different-focus content presentations of one interface. Therefore, in descriptions, the two interfaces may alternatively be described as two forms that are of one interface and that are switched between.

In the examples of the foregoing embodiments, the desktop is used as an example for illustration. In an in-application scenario, the AI assistant control is still used as an example. As a system-level global control, the AI assistant control may be displayed in a preset interaction manner, so that the event widget management interface is started through interaction with the AI assistant control. For example, a navigation bar is generally configured at the bottom of a full-screen mobile phone. The AI assistant control is displayed through interaction with the navigation bar (for example, the navigation bar is replaced with the AI assistant control, or the AI assistant control is displayed over the navigation bar). When the AI assistant control is displayed in an interface of an application, at least one event widget may be further displayed, for example, displayed in a small window.

In FIG. 11A and FIG. 11B, in an instant messaging software interface, the user touches and holds the navigation bar at the bottom to display the AI assistant control, and a newly created or recently started event widget is displayed in a small window. After the event widget is displayed, the user may interact with the AI assistant control. After the user performs preset operations such as touching and holding and sliding up, the event widget management interface is started to perform an event widget management function.

### Manner 2: Perform an operation of sliding up from a bottom of a desktop of the interface

It should be understood that, similar to an existing application window management interface, the event widget management interface may be triggered for display by performing the operation of sliding up from the bottom of the desktop of the interface.

The system may provide a preset gesture. When the user slides up from the bottom of the desktop, if a slide-up distance is within a preset range, the event widget management interface is started.

As shown in FIG. 8A and FIG. 8B, the user slides up from the bottom of the screen. If the slide-up distance is within the preset range, the desktop switches from a home screen to the event widget management interface. In this case, an animation transition may be used. For example, event widgets in an event widget list gradually appear from the bottom and move to a preset region in the screen with the slide-up gesture.

In some cases, when an event includes a single task, the user also has a requirement for using a single application. For example, for a reading event, the user needs to use only a single reading app. Therefore, the user also needs to start application management through a multi-application management interface.

Therefore, in an operating system, there are both event-centric and application-centric requirements. For an existing full-screen gesture, when the user slides up from the bottom of the screen, and a slide-up distance meets a preset threshold, the application window management interface is started.

In the solution of the present invention, the user slides up from the bottom, and whether to start the event widget management interface or the application window management interface is determined based on a slide-up distance. For example, three thresholds x1, x2, and x3 are separately defined. If the slide-up distance is within a range (x1, x2), the event widget management interface is started. If the slide-up distance is within a range (x2, x3), the application window management interface is started, and a list of application windows that are currently running in the operating system is displayed in the application window management interface.

In a possible implementation, in addition to a current event widget, an application window list is further displayed in the event widget management interface, and the event widget management interface can be switched to the application window management interface by performing a preset operation. Correspondingly, an event widget group is also displayed in the application window management interface, and the application window management interface can be switched to the event widget management interface by performing a preset operation.

For example, in a possible implementation, the first operation of the user may be received, and a thumbnail of the event widget management interface is displayed (or the event widget management interface is directly displayed), where the first operation is specifically a slide operation on a preset control, and an effective distance of the slide operation in the first operation is within a first preset range (for example, (x1, x2)). A third operation of the user may be further received, and a second interface is displayed, where the second interface includes a thumbnail of the application window management interface (or the application window management interface is directly displayed), the third operation is a slide operation on a preset control, and an effective distance of the slide operation in the third operation is within a second preset range (for example, (x2, x3)).

The foregoing describes the manner of starting the event widget management interface and the manner of switching between the event widget management interface and the application window management interface. The following describes another operation related to the event widget management interface.

In a possible implementation, the event widget may be managed in the event widget management interface. If a contact is placed on an event widget and a slide-up gesture is performed, the event widget is deleted. If a slide-up distance is insufficient, the event widget automatically bounces back to the event widget list. After the deletion is performed, the event widget is deleted from the system, and the event widget is no longer displayed in the home screen.

In a possible implementation, an event widget may be selected, and the event widget may be started. Optionally, display content after the event widget is selected may be the same as a result of tapping the event widget in the desktop. A difference lies in that, in the event widget management interface, a thumbnail of the event widget is displayed, and content of the event widget may be previewed, and key information is previewed in the desktop.

In a possible implementation, an event widget may be touched and held, and then the event widget may be added to the desktop. To be specific, a selection (for example, a touch and hold operation) for a thumbnail of a target event widget in the at least one event widget in the event widget management interface is received, and the thumbnail of the target event widget is added to the system desktop for display.

In a possible implementation, a display status of a thumbnail of an event widget in the event widget management interface is related to a completion degree of a subtask widget in the event widget. For example, the display status is a color or transparency.

The event widget may further use different colors/transparency to indicate an execution status of an event corresponding to the event widget. When a task corresponding to a task widget in the event widget is executed, a change of corresponding transparency may be triggered. For example, event progresses of 0, 25%, 50%, 75%, and 100% can be respectively defined, corresponding to different transparency from opaque to fully transparent. When a subtask corresponding to a task widget is completed, if a corresponding ratio is reached, a transparent state of the widget is changed.

In a possible implementation, the event widget may further display a type of the event widget by using a badge. For example, events corresponding to event widgets are classified into long-term events and short-term events based on a quantity of included subtasks, a corresponding time span, and the like, and different types are represented by using different badges.

1202: Receive a fifth operation, and switch the event widget corresponding to the to-do event to a first interface, where the first interface is an application interface, a system desktop, or an application window management interface.

The fifth operation may be a selection for an application corresponding to the subtask widget, so that the event widget corresponding to the to-do event may be switched to an application interface.

The fifth operation may be an operation of returning to the system desktop, for example, sliding up from the bottom or selecting a home button, so that the event widget corresponding to the to-do event may be switched to the system desktop.

The fifth operation may be an operation of triggering to start the application window management interface, for example, sliding up from the bottom or performing an operation on the preset control (for example, the navigation bar or the terminal assistant control), so that the event widget corresponding to the to-do event may be switched to the application window management interface.

The following describes a process of creating an event widget with reference to the accompanying drawings.

In a possible implementation, a creation request that is of the to-do event and that is entered by the user may be received, requirement information of a plurality of subtasks used to implement the to-do event and an application of a function used to execute each subtask are determined based on the creation request, and a requirement feedback result of each subtask is obtained by using the requirement information of the plurality of subtasks as a query input and by interacting with the corresponding application, where the requirement feedback result is used to construct the plurality of subtask widgets.

For example, a terminal device may receive the creation request of the to-do event as an initial instruction, create an event widget based on the received initial instruction, and display, in the event widget, at least one subtask of the event widget determined according to the initial instruction.

For example, the user may input the creation request of the to-do event by interacting with the AI assistant through a voice. The AI assistant has a built-in large language model, or parses the creation request of the to-do event by invoking a large language model on a cloud.

Specifically, the terminal device may forward the received creation request of the to-do event to the AI assistant, and the AI assistant parses the creation request of the to-do event. If a parsing result meets an event widget creation requirement, an event widget is created, and at least one subtask of an event is displayed in the event widget.

For example, if keywords such as a trip, a task, a to-do, a travel, and a tour are identified, it may be considered that the user needs to manage the event, and therefore, creation of the event widget is triggered. When the event is created, information such as a name and a type of the event is determined based on the parsing result.

The subtask of the event may be obtained based on the parsing result of the creation request of the to-do event, or may be recommended by the large language model based on the type of the event. For example, for a trip arrangement, subtasks may include air ticket booking/train ticket booking, hotel booking, and the like. After the at least one subtask of the event is obtained, the subtask is displayed in the event widget.

It may be understood that, in the event widget, subtasks of a same type may be presented to the user for selection. For example, subtasks of air ticket booking and train ticket booking are presented at the same time.

As shown in FIG. 12B-1 and FIG. 12B-2, if the creation request of the to-do event provided by the user is "Please arrange my business trip to Shanghai from Sunday to Wednesday", an event widget of a business trip type is created based on a parsing result, and a name of the event widget is "Business trip to Shanghai". Based on the event of the business trip type, subtasks of booking flights and hotels are recommended to the user and are displayed in the event widget.

After displaying the at least one subtask in the event widget, the terminal device continues to receive an input of the user, and determines a target subtask based on the input of the user, in other words, determines one or more subtask widgets that need to be added to the event widget.

The input of the user may be a preset operation on the target subtask, for example, tapping a text/control corresponding to the target subtask. For example, in FIG. 12B-1 andFIG. 12B-2, a control corresponding to "Book Flight" is tapped to use the booking a flight as the target subtask.

After the target subtask is determined, an associated application of the target subtask may be determined according to a preset rule. Specifically, the target subtask has different types. Correspondingly, the application also has at least one label. A preset relationship is established between a type of the target subtask and an application label, so that the associated application of the target subtask can be determined from local applications installed by the user.

For example, the target subtask is "Book air tickets", and a corresponding task type is an air ticket booking type in a transportation type. Application labels corresponding to the transportation type are travel, air ticket booking, and flight. A corresponding associated application may be ticket booking software or flight query software.

To determine the associated application of the target subtask, information (namely, the requirement information in this embodiment of this application) entered into the associated application further needs to be determined, so that the requirement feedback result corresponding to the requirement information is obtained from the associated application and presented to the user.

The requirement information may be obtained based on a semantic parsing result of the creation request of the to-do event, or may be supplemented by the user in subsequent interaction with the user.

For example, when the creation request of the to-do event is parsed, in addition to parsing whether the creation request meets the creation requirement of the event widget, some association information related to the event corresponding to the event widget is generated. The information may include time information and location information.

For example, in the input in FIG. 12B-1 and FIG. 12B-2, in addition to a user intention to arrange a business trip to Shanghai and an event type being a trip arrangement, time information "Sunday to Wednesday" and location information "Shanghai" may also be obtained.

In this way, the requirement information may be obtained based on the association information and the target subtask, and the requirement information as the query input is sent to the associated application, and is used as an input of the associated application. In the foregoing example, based on the time information "Sunday to Wednesday", the location information "Shanghai", and the target subtask being air ticket booking, it may be determined that the query input is "Book an air ticket from the current city to Shanghai on Sunday".

In a possible implementation, the user may be guided to supplement the requirement information through a query process interface. Optionally, at least one piece of query information is displayed in the query process interface, and each piece of query information corresponds to one associated application. FIG. 12C-1 and FIG. 12C-2 show a query process interface in which two pieces of query information are displayed, and respectively correspond to an APP 1 and an APP 2, to respectively query air ticket information and flight punctuality information.

In this solution, the query process interface includes an identifier of an associated application. By interacting with the identifier of the associated application, another associated application of a same type can be switched. For example, in FIG. 12D-1 and FIG. 12D-2, when the APP 1 is tapped, a list of applications that have the same label, namely, air ticket booking, as the APP 1 is displayed, and different applications are switched by selecting an application in the list. If the selected application is not installed locally, the application is associated with an application market, downloaded and installed, and then switched.

After receiving the query input, the associated application provides query results to the terminal based on the query input, and the terminal may filter the query results according to a preset rule.

Specifically, according to different target subtasks, the terminal may filter information based on different dimensions. Common dimensions include: departure date, departure time, price, punctuality, and time consumed during the journey. Specific dimension information is built in the system. A piece of filtering information may be displayed in a event widget interface. The filtering information provides filtering dimensions. The dimension information is presented in a form of a control. By interacting with the dimension information control, the filtering dimension may be changed, or detailed information about the dimension may be entered.

FIG. 12D-1 and FIG. 12D-2 separately show two cases of interaction with the dimension information control. The two cases correspond to changing the dimension and entering the detailed information about the dimension, respectively. In the left figure, a "Price" dimension information control is tapped, and a small window is displayed to list other currently available dimension information. One of the dimensions is selected to replace the price as the filtering dimension. In the right figure, a flight date is tapped, and a calendar window is displayed. Specific flight time is selected. If the user does not interact with the dimension information, the system performs filtering based on a default unread state of the target subtask. After the recommendation information is obtained through filtering, the recommendation information is displayed in the event widget. FIG. 12E shows display of recommendation information in an event widget. The user may select target recommendation information from the recommendation information in a manner of a touch input or a voice input. The recommendation information may be determined as the target recommendation information by detecting that the recommendation information corresponding to the touch input is the target recommendation information or by performing voice parsing.

After the target recommendation information is determined, a task widget corresponding to the target subtask may be created based on the target recommendation information. In FIG. 12E, after selecting one piece of air ticket information, the user may create a flight task widget based on the air ticket information.

After the task widget is created, a new task widget may be further created in the event widget based on the target subtask.

In FIG. 12F-1 to FIG. 12F-3, to avoid occupying a display area, before the task widget corresponding to the target subtask is created, the created task widget is displayed in the task widget in a thumbnail manner. After the task widget corresponding to the target subtask is created, the task widget is completely displayed.

When a same operation is performed on a plurality of task widgets, batch processing can be implemented. For example, during order payment, a payment interface is started by using a payment control in the widget or by interacting with a single task widget. The user may select the task widgets to implement unified payment, or select only a part of task widgets to pay for the part of task widgets. When only one task widget is selected, an order of only the task widget is paid.

After the task widget corresponding to the target subtask is created, a task widget may be further recommended to the user based on the type of the event widget, and the user may select the task widget and add the task widget to the event widget. In FIG. 12G-1 and FIG. 12G-2, after a recommendation widget is selected and added through tapping, the task widget is added to the event widget. If the user does not select the recommendation widget or performs a return gesture, adding the recommendation widget is cancelled.

In a possible implementation, when creating each subtask widget, the user may interrupt the subtask widget or switch between different creation by performing a specific operation.

For example, the plurality of subtasks include a first subtask and a second subtask. During subtask creation switching, in a possible implementation, an editing page of the first subtask may be displayed; first requirement information that is of the first subtask and that is entered by the user on the editing page is received; a sixth operation is received, and the editing page of the first subtask is switched to an editing page of the second subtask; and requirement information that is of the second subtask and that is entered by the user on the editing page is received.

In a possible implementation, a creation process may be interrupted when the first subtask is being created, and a second subtask creation process is performed. Then, creation of the first subtask may be continued, and creation content (which should be understood as requirement information of the user for the subtask) that has been entered in the first subtask is retained. Specifically, a seventh operation may be received, and the editing page of the second subtask is switched to the editing page of the first subtask including the first requirement information; and second requirement information of the second subtask that the user continues to enter on the editing page is received.

For example, when there are a plurality of subtasks, during a widget creation process, different subtask widgets may be switched by using a slide-up/slide-down gesture. When another subtask widget is switched to, creation of a current subtask widget may be interrupted, and creation progress is saved. If the another subtask widget is not created, a subtask list interface is jumped to through sliding up/down. When the interrupted creation of the subtask widget is switched back to, the subtask widget continues to be created.

When there are a plurality of subtask widgets (including a subtask widget that is interrupted during creation or that is being created), in a creation process, a subtask widget list may be displayed by using a preset gesture, to view, edit, or continue to create a subtask widget by using the subtask widget list.

FIG. 12H-1 to FIG. 12H-4 separately show a slide-up gesture and a touch and hold gesture operation in a process of booking a flight. It is assumed that a subtask of booking a hotel has been completed before the flight is booked. In this case, a hotel booking widget is displayed through switching by sliding up, and further operations such as payment and modification are supported. All subtask widgets are displayed through touching and holding. Currently, there are only two subtasks, and a flight booking widget and a hotel booking widget are displayed.

In embodiments of this application, at a system layer, an associated application may be automatically determined by parsing a creation request of an event widget, and the associated application is invoked to create a subtask widget. There is no need to start each associated application to implement a plurality of subtasks of one event. All operations can be completed on the system desktop, and operations such as application switching and interface jumping are not required, thereby simplifying a subtask processing procedure of the event.

FIG. 13 is a diagram of a structure of an interface display apparatus according to an embodiment of this application. The apparatus 1300 includes:
a processing module 1301, configured to: receive a first operation, and trigger a display module 1302 to display an event widget management interface, where the event widget management interface includes a thumbnail of at least one event widget, the expanded event widget includes a plurality of subtask widgets, and each subtask widget is a trigger entry of a subfunction of an application; and receive a second operation, and trigger the display module 1302 to switch from the event widget management interface to an application window management interface.

In a possible implementation, the first operation is:
an operation of sliding up from a bottom of a desktop, or an operation on a preset control, where the preset control is a terminal assistant or a navigation bar; or
a selection operation on first indication information of the at least one event widget in a first interface; or
a switching operation on a first thumbnail of an application window group in a second interface, and a selection operation on first indication information that is of the at least one event widget and that is displayed in response to the switching operation.

In a possible implementation, the first interface further includes second indication information of the application window group, the second indication information of the application window group is arranged after the first indication information of the at least one event widget, the second interface further includes second indication information of the at least one event widget, and the second indication information of the at least one event widget is arranged after the first thumbnail of the application window group.

In a possible implementation, the first operation is specifically a slide operation on the preset control, and an effective distance of the slide operation in the first operation is within a first preset range; and the processing module 1301 is further configured to:
receive a third operation, and trigger the display module 1302 to display the second interface, where the third operation is a slide operation on the preset control, and an effective distance of the slide operation in the third operation is within a second preset range.

In a possible implementation, the processing module 1301 is further configured to:
receive a selection for a thumbnail of a target event widget in the at least one event widget in the event widget management interface, and trigger the display module 1302 to add the thumbnail of the target event widget to a system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the processing module 1301 is further configured to:
receive a fourth operation, and trigger the display module 1302 to display an event widget corresponding to the to-do event, where the fourth operation is selecting a thumbnail of the event widget corresponding to the to-do event in the event widget management interface, the event widget corresponding to the to-do event includes a plurality of subtask widgets, and each subtask widget is a trigger entry of a subfunction of an application.

In a possible implementation, the processing module 1301 is further configured to:
receive a fifth operation, and trigger the display module 1302 to switch the event widget corresponding to the to-do event to the first interface, where the first interface is an application interface, the system desktop, or the application window management interface.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the processing module 1301 is further configured to:
receive a creation request that is of the to-do event and that is entered by a user;
determine, based on the creation request, requirement information of a plurality of subtasks used to implement the to-do event and an application of a function used to execute each subtask; and
obtain a requirement feedback result of each subtask by using the requirement information of the plurality of subtasks as a query and by interacting with the corresponding application, where the requirement feedback result is used to construct the plurality of subtask widgets.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
the processing module 1301 is specifically configured to:
trigger the display module 1302 to display an editing page of the first subtask;
receive first requirement information that is of the first subtask and that is entered by the user on the editing page;
receive a sixth operation, and trigger the display module 1302 to switch from the editing page of the first subtask to an editing page of the second subtask; and
receive requirement information that is of the second subtask and that is entered by the user on the editing page.

In a possible implementation, the processing module 1301 is further configured to:
receive a seventh operation, and trigger the display module 1302 to switch from the editing page of the second subtask to the editing page of the first subtask including the first requirement information; and
receive second requirement information of the second subtask that the user continues to enter on the editing page.

In addition, this application further provides an interface display apparatus, including:
a processing module, configured to: display an event widget corresponding to a to-do event, where the event widget corresponding to the to-do event includes a plurality of subtask widgets and indication information of the to-do event; and each subtask widget is a trigger entry of a subfunction of an application, and the event widget corresponding to the to-do event indicates that the plurality of subtask widgets are associated with the to-do event; and
receive a fifth operation, and switch the event widget corresponding to the to-do event to a first interface, where the first interface is an application interface, a system desktop, or an application window management interface.

In a possible implementation, before the event widget corresponding to the to-do event is displayed, the processing module is further configured to:
receive a fourth operation.

The fourth operation is selecting the event widget corresponding to the to-do event in the system desktop or an event widget management interface, and the system desktop or the event widget management interface includes at least one event widget including the to-do event; or
the fourth operation is an operation on a preset control, and the preset control is a terminal assistant or a navigation bar.

In a possible implementation, the plurality of subtask widgets include a first subtask widget and a second subtask widget, and the first subtask widget and the second subtask widget correspond to different applications, or the first subtask widget and the second subtask widget correspond to different functions of a same application.

In a possible implementation, the processing module is further configured to:
display the first interface, where the first interface includes a first thumbnail of an event widget group in first indication information of the at least one event widget; and
receive a selection operation on the first thumbnail of the event widget group in the first indication information of the at least one event widget, and display the event widget management interface, where the event widget management interface includes the at least one event widget including the to-do event; or
receive a switching operation on a first thumbnail, and display a second interface, where the second interface includes a first thumbnail of an application window group.

In a possible implementation, before the first interface is displayed, the processing module is further configured to:
receive a first operation.

The first operation is an operation of sliding up from a bottom of a desktop of the interface, or an operation on the preset control, where the preset control is the terminal assistant or the navigation bar.

In a possible implementation, the first interface further includes second indication information of the application window group, the second indication information of the application window group is arranged after the first thumbnail of the event widget group in the first indication information of the at least one event widget, the second interface further includes second indication information of the at least one event widget, and the second indication information of the at least one event widget is arranged after the first thumbnail of the application window group.

In a possible implementation, the first operation is specifically a slide operation on the preset control, and an effective distance of the slide operation is within a first preset range; and the processing module is further configured to:
receive a third operation, and display the second interface, where the second interface includes the first thumbnail of the application window group, the third operation is a slide operation on the preset control, and an effective distance of the slide operation is within a second preset range.

In a possible implementation, the processing module is further configured to:
receive a selection for a thumbnail of a target event widget in the at least one event widget in the event widget management interface, and add the thumbnail of the target event widget to the system desktop for display.

In a possible implementation, a display status of a thumbnail of an event widget in the event widget management interface is related to a completion degree of a subtask widget in the event widget.

In a possible implementation, the display status is a color or transparency.

In a possible implementation, the processing module is further configured to:
receive a creation request that is of the to-do event and that is entered by a user;
determine, based on the creation request, requirement information of a plurality of subtasks used to implement the to-do event and an application of a function used to execute each subtask; and
obtain a requirement feedback result of each subtask by using the requirement information of the plurality of subtasks as a query and by interacting with the corresponding application, where the requirement feedback result is used to construct the plurality of subtask widgets.

In a possible implementation, the requirement information of the plurality of subtasks is information carried in semantics of the creation request or information supplemented by the user for the plurality of subtasks.

In a possible implementation, the plurality of subtasks include a first subtask and a second subtask; and
the processing module is specifically configured to:
display an editing page of the first subtask;
receive first requirement information that is of the first subtask and that is entered by the user on the editing page;
receive a sixth operation, and switch from the editing page of the first subtask to an editing page of the second subtask; and
receive requirement information that is of the second subtask and that is entered by the user on the editing page.

In a possible implementation, the processing module is further configured to:
receive a seventh operation, and switch from the editing page of the second subtask to the editing page of the first subtask including the first requirement information; and
receive second requirement information of the second subtask that the user continues to enter on the editing page.

The following describes an execution device provided in an embodiment of this application. FIG. 14 is a diagram of a structure of an execution device according to an embodiment of this application. The execution device 1400 may be specifically represented as a mobile phone, a tablet, a notebook computer, a smart wearable device, or the like. This is not limited herein. Specifically, the execution device 1400 includes a receiver 1401, a transmitter 1402, a processor 1403 (there may be one or more processors 1403 in the execution device 1400, and one processor is used as an example in FIG. 14), and a memory 1404. The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores processor and operation instructions, an executable module, or a data structure, or a subset thereof, or an extended set thereof. The operation instructions may include various operation instructions for implementing various operations.

The processor 1403 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip and has a signal processing capability. In an implementation process, steps in the foregoing methods can be implemented by using a hardware integrated logical circuit in the processor 1403, or by using instructions in a form of software. The processor 1403 may be a general-purpose processor, a digital signal processor (digital signal processor, DSP), a microprocessor, or a microcontroller. The processor 1403 may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digital or character information, and generate a signal input related to a related setting and function control of the execution device. The transmitter 1402 may be configured to output the digital or character information. The transmitter 1402 may be further configured to send instructions to a disk group, to modify data in the disk group.

In this embodiment of this application, in one case, the processor 1403 is configured to perform the steps of the interface display method in the embodiments corresponding to FIG. 4 and FIG. 12I.

An embodiment of this application further provides a computer program product including computer-readable instructions. When the computer-readable instructions are run on a computer, the computer is enabled to perform steps performed by the execution device, or the computer is enabled to perform steps performed by the training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

In addition, it should be noted that the described apparatus embodiments are merely examples. The units described as separate components may or may not be physically separate, and components displayed as units may or may not be physical units, in other words, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by software, hardware, firmware, or any combination thereof. When the software is used to implement the foregoing embodiments, all or a part of the foregoing embodiments may be implemented in a form of a computer program product.

The computer program product includes one or more computer instructions. When the computer program instructions are loaded and executed on a computer, procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. An interface display method, wherein the method comprises:
receiving a first operation, and displaying an event widget management interface, wherein the event widget management interface comprises a thumbnail of at least one event widget, the event widget comprises a plurality of subtask widgets, and each subtask widget is a trigger entry of a subfunction of an application; and
receiving a second operation, and switching from the event widget management interface to an application window management interface.

2. The method according to claim 1, wherein the first operation is:
an operation of sliding up from a bottom of a desktop, or an operation on a preset control, wherein the preset control is a terminal assistant or a navigation bar; or
a selection operation on first indication information of the event widget management interface in a first interface; or
a switching operation on first indication information of an application window group in a second interface, and a selection operation on first indication information that is of the event widget management interface and that is displayed in response to the switching operation.

3. The method according to claim 2, wherein the first interface further comprises second indication information of the application window group, the second indication information of the application window group is arranged after the first indication information of the at least one event widget, the second interface further comprises second indication information of the at least one event widget, and the second indication information of the at least one event widget is arranged after a first thumbnail of the application window group.

4. The method according to claim 2 or 3, wherein the first operation is specifically a slide operation on the preset control, and an effective distance of the slide operation in the first operation is within a first preset range; and the method further comprises:
receiving a third operation, and displaying the second interface, wherein the third operation is a slide operation on the preset control, and an effective distance of the slide operation in the third operation is within a second preset range.

5. The method according to any one of claims 1 to 4, wherein the method further comprises:
receiving a selection for a thumbnail of a target event widget in the at least one event widget in the event widget management interface, and adding the thumbnail of the target event widget to a system desktop for display.

6. The method according to any one of claims 1 to 5, wherein a display status of a thumbnail of an event widget in the event widget management interface is related to a completion degree of a subtask widget in the event widget.

7. The method according to claim 6, wherein the display status is a color or transparency.

8. The method according to any one of claims 1 to 7, wherein the method further comprises:
receiving a fourth operation, and displaying an event widget corresponding to a to-do event, wherein the fourth operation is selecting a thumbnail of the event widget corresponding to the to-do event in the event widget management interface, the event widget corresponding to the to-do event comprises a plurality of subtask widgets, and each subtask widget is a trigger entry of a subfunction of an application.

9. The method according to claim 8, wherein the method further comprises:
receiving a fifth operation, and switching the event widget corresponding to the to-do event to the first interface, wherein the first interface is an application interface, the system desktop, or the application window management interface.

10. The method according to any one of claims 1 to 9, wherein the plurality of subtask widgets comprise a first subtask widget and a second subtask widget, and the first subtask widget and the second subtask widget correspond to different applications, or the first subtask widget and the second subtask widget correspond to different functions of a same application.

11. The method according to any one of claims 1 to 10, wherein the method further comprises:
receiving a creation request that is of the to-do event and that is entered by a user;
determining, based on the creation request, requirement information of a plurality of subtasks used to implement the to-do event and an application of a function used to execute each subtask; and
obtaining a requirement feedback result of each subtask by using the requirement information of the plurality of subtasks as a query and by interacting with the corresponding application, wherein the requirement feedback result is used to construct the plurality of subtask widgets.

12. The method according to claim 11, wherein the requirement information of the plurality of subtasks is information carried in semantics of the creation request or information supplemented by the user for the plurality of subtasks.

13. The method according to claim 11 or 12, wherein the plurality of subtasks comprise a first subtask and a second subtask; and
determining the requirement information of the plurality of subtasks used to implement the to-do event comprises:
displaying an editing page of the first subtask;
receiving first requirement information that is of the first subtask and that is entered by the user on the editing page;
receiving a sixth operation, and switching from the editing page of the first subtask to an editing page of the second subtask; and
receiving requirement information that is of the second subtask and that is entered by the user on the editing page.

14. The method according to claim 13, wherein the method further comprises:
receiving a seventh operation, and switching from the editing page of the second subtask to the editing page of the first subtask comprising the first requirement information; and
receiving second requirement information of the second subtask that the user continues to enter on the editing page.

15. An interface display apparatus, wherein the apparatus comprises:
a processing module, configured to: receive a first operation, and trigger a display module to display an event widget management interface, wherein the event widget management interface comprises a thumbnail of at least one event widget, the expanded event widget comprises a plurality of subtask widgets, and each subtask widget is a trigger entry of a subfunction of an application; and receive a second operation, and trigger the display module to switch from the event widget management interface to an application window management interface.

16. The apparatus according to claim 15, wherein the first operation is:
an operation of sliding up from a bottom of a desktop, or an operation on a preset control, wherein the preset control is a terminal assistant or a navigation bar; or
a selection operation on first indication information of the at least one event widget in a first interface; or
a switching operation on a first thumbnail of an application window group in a second interface, and a selection operation on first indication information that is of the at least one event widget and that is displayed in response to the switching operation.

17. The apparatus according to claim 15 or 16, wherein the first interface further comprises second indication information of the application window group, the second indication information of the application window group is arranged after the first indication information of the at least one event widget, the second interface further comprises second indication information of the at least one event widget, and the second indication information of the at least one event widget is arranged after the first thumbnail of the application window group.

18. The apparatus according to any one of claims 15 to 17, wherein the first operation is specifically a slide operation on the preset control, and an effective distance of the slide operation in the first operation is within a first preset range; and the processing module is further configured to:
receive a third operation, and trigger the display module to display the second interface, wherein the third operation is a slide operation on the preset control, and an effective distance of the slide operation in the third operation is within a second preset range.

19. The apparatus according to claim 18, wherein the processing module is further configured to:
receive a selection for a thumbnail of a target event widget in the at least one event widget in the event widget management interface, and trigger the display module to add the thumbnail of the target event widget to a system desktop for display.

20. The apparatus according to claim 18 or 19, wherein a display status of a thumbnail of an event widget in the event widget management interface is related to a completion degree of a subtask widget in the event widget.

21. The apparatus according to claim 19 or 20, wherein the display status is a color or transparency.

22. The apparatus according to any one of claims 16 to 21, wherein the processing module is further configured to:
receive a fourth operation, and trigger the display module to display an event widget corresponding to the to-do event, wherein the fourth operation is selecting a thumbnail of the event widget corresponding to the to-do event in the event widget management interface, the event widget corresponding to the to-do event comprises a plurality of subtask widgets, and each subtask widget is a trigger entry of a subfunction of an application.

23. The apparatus according to any one of claims 16 to 22, wherein the processing module is further configured to:
receive a fifth operation, and trigger the display module to switch the event widget corresponding to the to-do event to the first interface, wherein the first interface is an application interface, the system desktop, or the application window management interface.

24. The apparatus according to claim 23, wherein the plurality of subtask widgets comprise a first subtask widget and a second subtask widget, and the first subtask widget and the second subtask widget correspond to different applications, or the first subtask widget and the second subtask widget correspond to different functions of a same application.

25. The apparatus according to any one of claims 15 to 24, wherein the processing module is further configured to:
receive a creation request that is of the to-do event and that is entered by a user; determine, based on the creation request, requirement information of a plurality of subtasks used to implement the to-do event and an application of a function used to execute each subtask; and obtain a requirement feedback result of each subtask by using the requirement information of the plurality of subtasks as a query and by interacting with the corresponding application, wherein the requirement feedback result is used to construct the plurality of subtask widgets.

26. The apparatus according to claim 25, wherein the requirement information of the plurality of subtasks is information carried in semantics of the creation request or information supplemented by the user for the plurality of subtasks.

27. The apparatus according to claim 25 or 26, wherein the plurality of subtasks comprise a first subtask and a second subtask; and
the processing module is specifically configured to:
trigger the display module to display an editing page of the first subtask; receive first requirement information that is of the first subtask and that is entered by the user on the editing page; receive a sixth operation, and trigger the display module to switch from the editing page of the first subtask to an editing page of the second subtask; and receive requirement information that is of the second subtask and that is entered by the user on the editing page.

28. The apparatus according to claim 27, wherein the processing module is further configured to:
receive a seventh operation, and trigger the display module to switch from the editing page of the second subtask to the editing page of the first subtask comprising the first requirement information; and receive second requirement information of the second subtask that the user continues to enter on the editing page.

29. An interface display apparatus, wherein the apparatus comprises a memory and a processor, the memory stores code, and the processor is configured to: obtain the code and perform the method according to any one of claims 1 to 14.

30. A computer-readable storage medium, comprising computer-readable instructions, wherein when the computer-readable instructions are run on a computer device, the computer device is enabled to perform the method according to any one of claims 1 to 14.

31. A computer program product, comprising computer-readable instructions, wherein when the computer-readable instructions are run on a computer device, the computer device is enabled to perform the method according to any one of claims 1 to 14.

32. A user interface, comprising:
an event widget management interface, wherein the event widget management interface comprises a thumbnail of at least one event widget; and
the event widget comprises a plurality of subtask widgets, and each subtask widget is a trigger entry of a subfunction of an application.
